# EUROPEAN PATENT APPLICATION

(11) **EP 4 819 525 A1**
(43) Date of publication of application: **07.10.2026**
(21) Application number: 24896729.1
(22) Date of filing: 29.11.2024
(51) Int. Cl.: H04L 5/00

(54) **COMMUNICATION METHOD AND APPARATUS, TERMINAL DEVICE, AND NETWORK DEVICE**

(30) Priority: 29.11.2023 CN 202311609641
(71) Applicant: Beijing Unisoc Communications Technology Co., Ltd, Beijing 100083 (CN)
(72) Inventor: ZHOU, Huan, Beijing 100083 (CN)
(74) Representative: Murgitroyd & Company
(86) International application number: PCT/CN2024/135715
(87) International publication number: WO 2025/113649

(57) **Abstract**

The present application relates to the technical field of communications, and discloses a communication method and apparatus, a terminal device, and a network device. In the present application, the resource type of a measurement resource associated with CSI reporting is indicated/configured by means of first information. Since measurement results of the CSI reporting are obtained on the basis of the measurement of measurement resources associated with the CSI reporting, when the measurement resources associated with the CSI reporting belong to one resource type, the measurement results of the CSI reporting can independently reflect one resource type. In this way, after a network device obtains the measurement results, the network device can independently perform accurate channel assessment or interference assessment on one resource type, so as to adapt to a scenario where the network expects to perform channel assessment or interference assessment on only one resource type.

## Description

The present disclosure claims a priority to a prior application with application No. 202311609641.2, titled "communication method and apparatus, terminal device and network device", and filed on November 29, 2023, the entire content of which is incorporated into herein by reference.

### TECHNICAL FIELD

The present disclosure relates to the field of communication technologies, and in particular, to a communication method and apparatus, a terminal device, and a network device.

### BACKGROUND

In a time division duplexing (Time Division Duplexing, TDD) system, all frequency-domain resources of a TDD carrier are required to have a same transmission direction at a same moment, i.e., all are uplink or all are downlink. Thus, the TDD system has the following resource type: different frequency-domain resources on the same TDD carrier adopting a same uplink-downlink slot configuration. However, this type of resource has the phenomenon that the uplink-downlink slot configuration cannot be flexibly configured.

With the development and popularization of information and communication technologies, service requirements show a trend of diversification and personalization. Application scenarios and service requirements of different vertical industries also vary, for example, scenarios such as home, office, and industry have different requirements on network bandwidth, transmission rate, and latency, etc. In this case, to better satisfy the transmission requirements of various services and different terminal devices, resources belonging to a plurality of resource types, such as low-latency resources, high-reliability resources, and high-rate resources, etc., may exist simultaneously in a communication system, to support different uplink-downlink transmission requirements.

However, when measurement resources configured for channel state information (CSI) measurement/CSI reporting simultaneously belong to a plurality of resource types, a channel measurement result or an interference measurement result measured from the measurement resources may not separately reflect a certain resource type, causing a network to be incapable of performing accurate channel estimation or interference estimation for a certain resource type separately.

### SUMMARY

The present disclosure provides a communication method and apparatus, a terminal device, and a network device, so as to solve the problem that the channel measurement result or the interference measurement result measured from the measurement resource may not separately reflect a certain resource type, thereby causing a network to be incapable of performing accurate channel estimation or interference estimation for the certain resource type separately.

In a first aspect, a communication method of the present disclosure is provided and includes:
receiving first information, where the first information is used for indicating a resource type of a measurement resource;
performing measurement according to the first information and reporting channel state information (CSI).

It can be seen that, in the present disclosure, the resource type of the measurement resource associated with the CSI reporting being indicated/configured by the first information is implemented. Since the channel measurement result or the interference measurement result of the CSI reporting is obtained by performing channel measurement or interference measurement according to the measurement resource associated with the CSI reporting, therefore, when the measurement resource associated with the CSI reporting belongs to one resource type, the channel measurement result or the interference measurement result of the CSI reporting may separately reflect one resource type. Thus, after the network device acquires the channel measurement result or the interference measurement result, the network device may perform accurate channel estimation or interference estimation for one resource type separately, so as to adapt to a scenario where the network expects to only perform channel estimation or interference estimation for one resource type.

In a second aspect, a communication method of the present disclosure is provided and includes:
sending first information, where the first information is used for indicating a resource type of a measurement resource.

In a third aspect, a communication apparatus of the present disclosure is provided and includes:
a receiving unit, configured to receive first information, where the first information is used for indicating a resource type of a measurement resource;
a sending unit, configured to perform measurement and report channel state information (CSI) according to the first information.

In a fourth aspect, a communication apparatus of the present disclosure is provided and includes:
a sending unit, configured to send first information, where the first information is used for indicating a resource type of a measurement resource.

In a fifth aspect, the steps in the method designed in the first aspect are applied to a terminal device or within a terminal device.

In a sixth aspect, the steps in the method designed in the second aspect are applied to a network device or within a network device.

In a seventh aspect, a terminal device of the present disclosure is provided and includes a processor, a memory, and a computer program or computer instructions stored on the memory, where the processor executes the computer program or computer instructions, to implement the steps in the method designed in the first aspect.

In an eighth aspect, a network device of the present disclosure is provided and includes a processor, a memory, and a computer program or computer instructions stored on the memory, where the processor executes the computer program or computer instructions, to implement the steps in the method designed in the second aspect.

In a ninth aspect, a chip of the present disclosure is provided and includes a processor, where the processor performs the steps in the method designed in the above first aspect or the second aspect.

Optionally, the chip further includes a communication interface, and the processor performs the sending step and/or the receiving step in the method designed in the above first aspect or the second aspect via the communication interface.

In a tenth aspect, a chip module of the present disclosure is provided and includes a chip, the chip includes a processor, where the processor performs the steps in the method designed in the above first aspect or the second aspect.

Optionally, the chip module further includes a transceiver component, and the processor performs the sending step and/or the receiving step in the method designed in the above first aspect or the second aspect via the transceiver component.

In an eleventh aspect, a computer readable storage medium of the present disclosure is provided, where the computer readable storage medium has stored a computer program or computer instructions, and the computer program or computer instructions, upon being executed, implement the steps in the method designed in the above first aspect or the second aspect. For example, the computer program or computer instructions are executed by a processor.

In a twelfth aspect, a computer program product of the present disclosure is provided and includes a computer program or computer instructions, and the computer program or computer instructions, upon being executed, perform the steps in the method designed in the above first aspect or the second aspect. For example, the computer program or computer instructions are executed by a processor.

In a thirteenth aspect, a communication system of the present disclosure is provided and includes a communication apparatus (e.g., a terminal device or a chip) configured to perform any one of the methods provided in the first aspect, and/or includes a communication apparatus (e.g., a network device or a chip) configured to perform any one of the methods provided in the second aspect.

For the beneficial effects brought by the technical solutions of the second aspect to the thirteenth aspect, reference may be made to the technical effects brought by the technical solution of the first aspect, which will not be repeated herein.

### BRIEF DESCRIPTION OF THE DRAWINGS

FIG. 1 is a schematic diagram of an architecture of a communication system of the embodiments of the present disclosure;
FIG. 2 is a distribution schematic diagram of a plurality of subbands within a same carrier of the embodiments of the present disclosure;
FIG. 3 is a distribution schematic diagram of a measurement resource of the embodiments of the present disclosure;
FIG. 4 is a flow schematic diagram of a communication method of the embodiments of the present disclosure;
FIG. 5 is a block diagram of components of a functional unit of a communication apparatus of the embodiments of the present disclosure;
FIG. 6 is a block diagram of components of a functional unit of yet another communication apparatus of the embodiments of the present disclosure;
FIG. 7 is a structural schematic diagram of a terminal device of the embodiments of the present disclosure; and
FIG. 8 is a structural schematic diagram of a network device of the embodiments of the present disclosure.

### DETAILED DESCRIPTION

It should be understood that, the terms such as "first", "second", etc., involved in the embodiments of the present disclosure are used for distinguishing different objects, but not used for describing a specific order. Furthermore, the terms "comprise/include/contain" and "have" and any derivations thereof are intended to cover non-exclusive inclusion. For example, a process, method, software, product, or device that contains a series of steps or units is not limited to the listed steps or units, but may also include steps or units that are not listed, or may also include other steps or units inherent to these processes, methods, products, or devices.

"Embodiment/embodiments" involved in the embodiments of the present disclosure means that a particular feature, structure, or characteristic described in conjunction with the embodiment may be contained in at least one embodiment of the present disclosure. The appearance of the phrase in various places in the specification does not necessarily refer to the same embodiment, nor is it an independent or alternative embodiment mutually exclusive with other embodiments. Those skilled in the art explicitly and implicitly understand that the embodiments described herein may be combined with other embodiments.

In the embodiments of the present disclosure, "and/or" is an association relationship for describing associated objects, which represents that there may be three kinds of relationships. For example, A and/or B may represent three cases as follows: A exists alone; both A and B exist; B exists alone. Herein, A and B may be singular or plural.

In the embodiments of the present disclosure, the symbol "/" may represent an "or" relationship between the associated objects. Of course, the symbol "/" may also represent an "and" relationship between the associated objects. For example, A/B may represent three cases as follows: "A", "B", "A and B". Herein, each of A, B, and C may be an element, or a set containing one or more elements.

"At least one of items" or similar expressions in the embodiments of the present disclosure refer to any combination of these items, including a single one (item) or any combination of plural ones (items). referring to one or more, and a plurality of refer to two or more. For example, at least one (item) of a, b, or c may represent seven cases as follows: "a", "b", "c", "a and b", "a and c", "b and c" or "a and b and c". Herein, each of a, b, and c may be an element, or a set containing one or more elements.

"Higher than" and "greater than" in the embodiments of the present disclosure may be expressed as a same concept, "lower than" and "less than" may be expressed as a same concept, "not lower than" may be expressed as a same concept as "higher than or equal to" or "greater than or equal to", and "not higher than" may be expressed as a same concept as "lower than or equal to" or "less than or equal to". In the application, for the same scheme, "equal to" may be used with "less than" or "greater than", but not with both "less than" and "greater than" at the same time. When "equal to" is used together with "less than", it is applicable to the technical solution adopted by "less than". When "equal to" is used together with "greater than", it is applicable to the technical solution adopted by "greater than".

"Of", "corresponding/relevant", "corresponding", "indicated", and "associated" in the embodiments of the present disclosure may be used interchangeably with each other.

"Associated", "corresponding/relevant", "corresponding", "be", "of", "be", "belong to", "as", and "regard" in the embodiments of the present disclosure may sometimes be used interchangeably with each other.

"CSI reporting", "CSI report", "CSI feedback", etc., in the embodiments of the present disclosure may sometimes be used interchangeably with each other.

"Connection" in the embodiments of the present disclosure refers to various connection manners such as direct connection or indirect connection, etc., to implement communication between devices, which is not limited in any way.

"Network" in the embodiments of the present disclosure may be expressed as a same concept as "system", and a communication system is a communication network.

The relevant contents, concepts, meanings, technical problems, technical solutions, beneficial effects, etc., involved in the embodiments of the present disclosure are explained below.

### I. Communication system

### [Communication System]

The technical solutions of the embodiments of the present disclosure may be applied to various communication systems, for example: a long term evolution (Long Term Evolution, LTE) system, an advanced long term evolution (Advanced Long Term Evolution, LTE-A) system, a new radio (New Radio, NR) system, an evolved system of the NR system, an LTE-based access to unlicensed spectrum (LTE-based Access to Unlicensed Spectrum, LTE-U) system, an NR-based access to unlicensed spectrum (NR-based Access to Unlicensed Spectrum, NR-U) system, a non-terrestrial network (Non-Terrestrial Networks, NTN) system, a universal mobile telecommunication system (Universal Mobile Telecommunication System, UMTS), a 6th-generation (6th-Generation, 6G) communication system, or other communication systems, etc.

It should be noted that, traditional communication systems support a limited number of connections. With the development of communication technologies, the communication system in the present disclosure may not only be a traditional communication system, for example, but also a device to device (D2D) communication, a machine to machine (M2M) communication, a machine type communication (MTC), a vehicle to vehicle (V2V) communication, a vehicle to everything (V2X) communication, a narrow band internet of things (NB-IoT) communication, etc.

Optionally, the technical solutions of the embodiments of the present disclosure may be applied to scenarios such as beamforming, carrier aggregation (CA), dual connectivity (DC), or standalone (SA) deployment, etc.

Optionally, spectrum used for communication between a terminal device and a network device may be a licensed band, may also be an unlicensed band, which is not limited thereto. In addition, the unlicensed band may be understood as a shared band, and the licensed band may be understood as a non-shared band.

Since various embodiments in conjunction with the terminal device and network device are described in the embodiments of the present disclosure, the terminal device and network device involved will be specifically described below.

### [Terminal device]

The terminal device may be a device with a transceiving function, and may also be referred to as a terminal, a user equipment (UE), a remote terminal device (remote UE), a relay device (relay UE), an access terminal device, a subscriber unit, a subscriber station, a mobile station, a mobile platform, a remote station, a mobile device, a user terminal device, a smart terminal device, a wireless communication device, a subscriber agent, or a subscriber apparatus. It should be noted that, a relay device is a terminal device capable of providing relay forwarding services for other terminal devices (including remote terminal devices).

Optionally, the terminal device may be a mobile phone, a pad, a computer with a wireless transceiving function, a virtual reality (VR) terminal device, an augmented reality (AR) terminal device, a wireless terminal device in industrial control, a wireless terminal device in self driving, a wireless terminal device in remote medical, a wireless terminal device in a smart grid, a wireless terminal device in transportation safety, a wireless terminal device in a smart city, or a wireless terminal device in a smart home, etc.

Optionally, the terminal device may be a cellular phone, a cordless phone, a session initiation protocol (SIP) phone, a wireless local loop (WLL) station, a personal digital assistant (PDA), a handheld device with a wireless communication function, a computing device or other processing devices connected to a wireless modem, a vehicle-mounted device, a wearable device, a terminal device in a next generation communication system (e.g., an NR communication system, a 6G communication system), or a terminal device in a future evolved public land mobile network (PLMN), etc., which is not specifically limited thereto.

Optionally, the terminal device may be deployed on land, including indoors or outdoors, handheld, wearable, or vehicle-mounted; may be deployed on water (e.g., on a ship, etc.); may be deployed in the air (e.g., an airplane, a balloon, a satellite, etc.).

Optionally, the terminal device may include an apparatus with a wireless communication function, such as a chip system, a chip, and a chip module. Exemplarily, the chip system may include a chip, and may also include other discrete devices.

Optionally, the terminal device may be a chip, a chip module, an apparatus, a unit, or the like, which is not specifically limited thereto.

### [Network device]

The network device may be a device with a transceiving function, and may be used for communicating with the terminal device.

Optionally, the network device may be responsible for radio resource management (RRM), quality of service (QoS) management, data compression and encryption, data transceiving, etc. on an air interface side.

Optionally, the network device may include a base station (BS) in a communication system or a device deployed in a radio access network (RAN) for providing a wireless communication function, i.e., the network device may include a device in the RAN.

For example, devices in the RAN may include an evolutional node B (evolutional node B, eNB or eNodeB) in an LTE communication system, a next generation evolved node B (ng-eNB) in an NR communication system, a next generation node B (gNB) in an NR communication system, a master node (MN) in a dual connectivity architecture, a second node or a secondary node (SN) in a dual connectivity architecture, etc., which is not specifically limited thereto.

Optionally, the network device may include a device in a core network (CN).

For example, devices in the CN may include an access and mobility management function (AMF), a user plane function (UPF), a session management function (SMF), etc.

Optionally, the network device may also be an access point (AP) in a wireless local area network (Wireless Local Area Network, WLAN), a relay station, a communication device in a future evolved PLMN network, a communication device in an NTN network, etc.

Optionally, the network device may include an apparatus for providing a wireless communication function for the terminal device, such as a chip system, a chip, and a chip module. Exemplarily, the chip system may include a chip, or may include other discrete devices.

Optionally, the network device may be a transmission and reception point (TRP).

Optionally, the network device may communicate with an internet protocol (Internet Protocol, IP) network. For example, the Internet, a private IP network, or other data networks, etc.

Optionally, the network device may include an independent node, to implement functions of the above base station, or may include two or more independent nodes, to implement functions of the above base station. For example, the network device includes a centralized unit (CU) and a distributed unit (DU), such as gNB-CU and gNB-DU. Further, in some other embodiments of the present disclosure, the network device may further include an active antenna unit (AAU). Herein, the CU implements a part of functions of the network device, and the DU implements another part of functions of the network device. For example, the CU is responsible for processing non-real-time protocols and services, implementing functions of a radio resource control (RRC) layer, a service data adaptation protocol (SDAP) layer, and a packet data convergence protocol (PDCP) layer. The DU is responsible for processing physical layer protocols and real-time services, implementing functions of a radio link control (RLC) layer, a medium access control (MAC) layer, and a physical (PHY) layer. Additionally, the AAU may implement a part of processing functions of the physical layer, radio frequency processing, and related functions of the active antenna. Since information at the RRC layer eventually becomes information at the PHY layer, or is transformed from information at the PHY layer, therefore, under this network deployment, higher-layer signaling (e.g., RRC signaling) may be considered as generated by the CU, sent from the DU, or sent jointly from the DU and the AAU. It can be understood that, the network device may include at least one of a CU, a DU, or an AAU. Additionally, the CU may be categorized as a RAN device, or may be categorized as a core network device, which is not limited thereto.

Optionally, the network device may be any one of sites among a plurality of sites for performing coherent joint transmission (CJT) with the terminal device, or another site other than the plurality of sites, or another network device for performing network communication with the terminal device, which is not specifically limited thereto. Herein, the multi-site coherent joint transmission may be a joint coherent transmission of a plurality of sites, or different data belonging to a same physical downlink shared channel (PDSCH) may be sent from different sites to the terminal device, or a plurality of sites may be virtualized into a site for transmission, or other forms of coordinated transmission. Names with the same meanings specified in other standards are also applicable to the present disclosure, i.e., the present disclosure does not limit the names of these parameters. Sites in the multi-site coherent joint transmission may be a remote radio head (RRH), a TRP, etc., which is not specifically limited thereto.

Optionally, the network device may be any one of sites among a plurality of sites for performing non-coherent joint transmission with the terminal device, or another site other than the plurality of sites, or another network device for performing network communication with the terminal device, which is not specifically limited thereto. Herein, the multi-site non-coherent joint transmission may be a joint non-coherent transmission of a plurality of sites, or different data belonging to a same PDSCH may be sent from different sites to the terminal device, or other forms of non-coordinated transmission. Names with the same meanings specified in other standards are also applicable to the present disclosure, i.e., the present disclosure does not limit the names of these parameters. Sites in the multi-site non-coherent joint transmission may be an RRH, a TRP, etc., which is not specifically limited thereto.

It should be noted that, the TRP in the present disclosure is not limited to a coherent joint transmission scenario or a non-coherent joint transmission scenario, and may also be applicable to other scenarios, which are not specifically limited thereto.

Optionally, the network device may have a mobility characteristic, for example, the network device may be a mobile device. Optionally, the network device may be a satellite, a balloon station. For example, satellites may be a low earth orbit (LEO) satellite, a medium earth orbit (MEO) satellite, a geostationary earth orbit (GEO) satellite, a high elliptical orbit (HEO) satellite, etc. Optionally, the network device may also be a base station disposed at a location such as on land or on water.

Optionally, the network device may provide service for a cell, and the terminal device in the cell may communicate with the network device via a transmission resource (e.g., a spectrum resource). Herein, the cell may be a macro cell, a small cell, a metro cell, a micro cell, a pico cell, a femto cell, etc.

Optionally, the network device may be a chip, a chip module, an apparatus, a unit, or the like, which is not specifically limited thereto.

### [Example Description]

An exemplary explanation of the communication system in the embodiments of the present disclosure is given below.

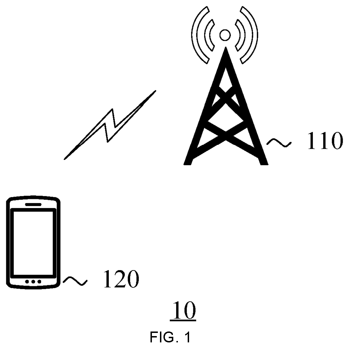

Exemplarily, for a network architecture of the communication system in the embodiments of the present disclosure, reference may be made to FIG. 1. As shown in FIG. 1, a communication system 10 may include a network device 110 and a terminal device 120. The terminal device 120 may communicate with the network device 110 in a wireless manner.

FIG. 1 is only an exemplary explanation of the network architecture of the communication system and does not limit the network architecture of the communication system in the embodiments of the present disclosure.

For example, the communication system 10 may further include a server or other devices.

For another example, the communication system 10 may include other network devices other than the network device 110.

For another example, the communication system 10 may include other terminal devices other than the terminal device 120.

### II. A communication method

### 1. Description

In order to better satisfy transmission requirements of various services and different terminal devices, resources belonging to a plurality of resource types may exist simultaneously in the communication system.

For example, in a time division duplexing (Time Division Duplexing, TDD) system, all frequency-domain resources of a TDD carrier are required to have a same transmission direction at a same time, i.e., all being uplink or downlink. That is, the TDD system has the following resource type: different frequency-domain resources on the same TDD carrier adopting a same uplink-downlink slot configuration. However, this type of resource cannot satisfy differentiated requirements of different services for uplink transmission and downlink transmission because the single uplink-downlink slot configuration cannot be flexibly configured. For this reason, the communication system further introduces the following resource type: different frequency-domain resources on the same TDD carrier adopt different uplink-downlink slot configurations, so that this type of resource may flexibly configure the uplink-downlink slot configuration. Therefore, in order to satisfy transmission requirements of various services and different terminal devices, the communication system may configure resources of the above two resource types for the terminal device.

In a CSI measurement/CSI reporting process, measurement resources configured by the network for CSI measurement/CSI reporting may belong to a plurality of resource types, e.g., a type is that different frequency-domain resources on the same TDD carrier adopt a same uplink-downlink slot configuration, and another type is that different frequency-domain resources on the same TDD carrier adopt different uplink-downlink slot configurations. In this case, a channel measurement result or an interference measurement result obtained from the measurement resource may not separately reflect a certain resource type, causing the network to be incapable of accurately performing channel estimation or interference estimation on the certain resource type separately.

Based on this, in the present embodiment, it is considered that a measurement resource configured for CSI measurement belongs to a resource type among a plurality of resource types and because the measurement resource configured for the CSI measurement includes a measurement resource associated with the CSI reporting, the measurement resource associated with the CSI reporting also belongs to the same resource type. Alternatively, in the present embodiment, it is considered that the measurement resource configured for CSI measurement belongs to a plurality of resource types, but the measurement resource associated with the CSI reporting belongs to one resource type among the plurality of resource types.

Since a channel measurement result or an interference measurement result of CSI reporting is obtained by performing channel measurement or interference measurement according to the measurement resource associated with the CSI reporting, therefore, when the measurement resource associated with the CSI reporting belongs to one resource type, the channel measurement result or the interference measurement result of the CSI reporting may separately reflect one resource type. Thus, after the network device acquires the channel measurement result or the interference measurement result, the network device may perform accurate channel estimation or interference estimation for one resource type separately, so as to adapt to a scenario where the network expects to only perform channel estimation or interference estimation for one resource type.

It should be noted that, the "a/the plurality of resource types" described in the present embodiment may include: different frequency-domain resources on the same TDD carrier adopt a same uplink-downlink slot configuration, different frequency-domain resources on the same TDD carrier adopt different uplink-downlink slot configurations, subband full duplex (SBFD), non-subband full duplex (non-SBFD), non-overlapping full duplex, overlapping full duplex, etc. Herein, SBFD refers to that different subbands of the same carrier adopt different uplink-downlink slot configurations; non-SBFD refers to that different subbands of the same carrier adopt a same uplink-downlink slot configuration; non-overlapping full duplex refers to that uplink and downlink are allowed to be performed simultaneously on non-overlapping subbands within a same carrier; overlapping full duplex refers to that uplink and downlink are allowed to be performed simultaneously on an overlapping/same subband within a same carrier.

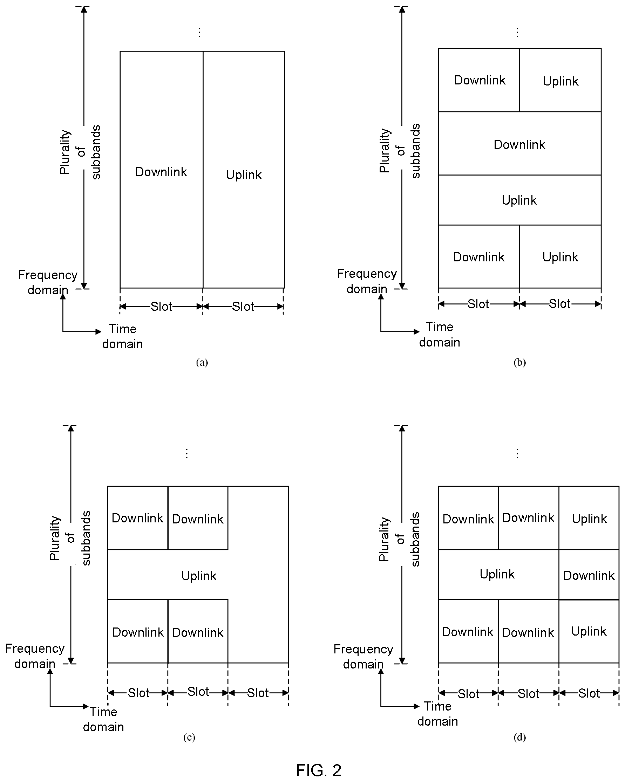

For example, in FIG. 2, uplink and downlink are allowed to be performed simultaneously on the non-overlapping subband within the same carrier; in (a) of FIG. 2, different subbands of the same carrier adopt the same uplink-downlink slot configuration, and in (b) of FIG. 2, (c) of FIG. 2, and (d) of FIG. 2, different subbands of the same carrier adopt different uplink-downlink slot configurations.

### 2. SBFD

### [Symbol]

### [SBFD]

To avoid the limitation of the uplink-downlink slot configuration in the TDD system as much as possible, while considering implementation complexity of the network device, the present embodiment considers SBFD, so as to support an uplink transmission and a downlink transmission at a same moment, and improve spectrum utilization and flexibility.

Optionally, the network configures an SBFD resource via network signaling (e.g., DCI, MAC signaling, MAC CE, system information, dedicated information, UE-specific signaling, etc.). Herein, the SBFD resource may include a time-domain SBFD resource and a frequency-domain SBFD resource.

The time-domain SBFD resource may be understood as an SBFD resource in time domain, which may include an SBFD symbol, an SBFD slot, an SBFD mini-slot, an SBFD subframe, etc.

The frequency-domain SBFD resource may be understood as an SBFD resource in frequency domain, which may include an SBFD uplink subband and an SBFD downlink subband. Herein, the SBFD uplink subband may be used for uplink transmission or uplink reception, and the SBFD downlink subband may be used for downlink transmission.

### [SBFD Symbol]

The SBFD symbol may be understood as a symbol configured to allow SBFD operation, or a symbol configured with the SBFD operation. That is, an attribute of whether an original symbol supports uplink transmission or downlink transmission changes due to the configuration of SBFD operation.

Of course, the SBFD uplink subband may be referred to as an "uplink subband"; the SBFD downlink subband may be referred to as a "downlink subband". In addition, in the present disclosure, "SBFD symbol" may also be replaced by "SBFD slot", "SBFD mini-slot", "SBFD subframe", etc., and the respective repressions thereof may be known similarly to the "SBFD symbol", which is not specifically limited thereto.

Optionally, there is a guard band between the uplink subband and the downlink subband. Thus, the guard band may avoid interference between uplink and downlink as much as possible.

Optionally, the SBFD symbol includes an SBFD downlink symbol, an SBFD uplink symbol, and an SBFD flexible symbol.

The SBFD downlink symbol refers to a downlink symbol configured to allow the SBFD operation, or refers to a downlink symbol configured with the SBFD operation. Therefore, the SBFD downlink symbol may support downlink transmission and uplink transmission.

For example, the network may configure a part of the uplink subband in the frequency band of the downlink symbol within the original slot via network signaling, so that the downlink symbol may support uplink transmission and downlink transmission, thereby implementing the configuration of SBFD operation.

The SBFD uplink symbol refers to an uplink symbol configured to allow the SBFD operation, or refers to an uplink symbol configured with the SBFD operation. Therefore, the SBFD uplink symbol may support uplink transmission and downlink transmission.

For example, the network may configure a part of the downlink subband in the frequency band of the uplink symbol within the original slot via the network signaling, so that the uplink symbol may support uplink transmission and downlink transmission, thereby implementing the configuration of SBFD operation.

The SBFD flexible symbol refers to a flexible symbol configured to allow the SBFD operation, or refers to a flexible symbol configured with the SBFD operation. Therefore, the SBFD flexible symbol may be configured by the network to support uplink transmission and downlink transmission, i.e., support both uplink transmission and downlink transmission simultaneously.

For example, the network may configure a part of the uplink subband and a part of the downlink subband in the frequency band of the flexible symbol within the original slot via network signaling, so that the flexible symbol may support uplink transmission and downlink transmission, thereby implementing the configuration of SBFD operation.

### [Non-SBFD symbol]

To distinguish from the "SBFD symbol", the non-SBFD symbol may be understood as a symbol not configured for SBFD operation, or an original symbol within a slot, or a symbol for which SBFD operation is not allowed.

That is, the attribute of whether an original symbol supports uplink transmission or downlink transmission does not change due to not configured with the SBFD. That is, the original downlink symbol may only support downlink transmission; an original uplink symbol may only support downlink transmission; the original flexible symbol may be configured by the network to support uplink transmission or downlink transmission, i.e., only a transmission mode is supported.

It should be noted that, in order to distinguish from the SBFD symbols appearing above, the present disclosure introduces "non-SBFD downlink symbol", "non-SBFD uplink symbol", and "non-SBFD flexible symbol".

Optionally, the non-SBFD symbol including a non-SBFD downlink symbol, a non-SBFD uplink symbol, and a non-SBFD flexible symbol, may include an original downlink symbol, an original uplink symbol, and an original flexible symbol.

The non-SBFD downlink symbol refers to a downlink symbol not configured for SBFD operation, or refers to a downlink symbol for which SBFD operation is not configured. That is, the non-SBFD downlink symbol is an original downlink symbol. Therefore, the non-SBFD downlink symbol may only support downlink transmission.

The non-SBFD uplink symbol refers to an uplink symbol not configured for SBFD operation, or refers to an uplink symbol for which SBFD operation is not configured. That is, the non-SBFD uplink symbol is an original uplink symbol. Therefore, a non-SBFD uplink symbol may only support uplink transmission.

The non-SBFD flexible symbol refers to a flexible symbol not configured for SBFD operation, or refers to a flexible symbol for which SBFD operation is not configured. That is, the non-SBFD flexible symbol is an original flexible symbol. Therefore, the non-SBFD flexible symbol may be configured by the network to support uplink transmission or downlink transmission, i.e., only a transmission mode is supported.

### 3. CSI-related configuration

### [Measurement resource]

The CSI-related configuration may include a CSI report configuration and/or a CSI resource configuration, and may be defined by a higher-layer parameter CSI-MeasConfig (CSI measurement configuration). Herein, the CSI-MeasConfig may indicate (contain/configure/carry) two higher-layer parameters as follows: CSI-ResourceConfig (CSI resource configuration) and CSI-ReportConfig (CSI report configuration).

Additionally, since the CSI-ReportConfig may indicate/contain CSI-ResourceConfigId (CSI resource configuration identity), the CSI-ResourceConfig is associated with (corresponds to/maps to) the CSI-ReportConfig through the CSI-ResourceConfigId.

The CSI-ReportConfig may be used for configuration of CSI reporting, i.e., to configure a CSI report.

The CSI-ResourceConfig may be used to configure resources for CSI measurement, such as CSI-RS. Additionally, the CSI-ResourceConfig may configure a CSI-Resource-Set (CSI resource set), and the CSI-Resource-Set may contain the most basic CSI-RS resource (such as CSI-RS-Resource).

The CSI-Resource-Set may indicate/contain at least one of: NZP-CSI-RS-ResourceSet (NZP (Non-Zero-Power)-CSI-RS resource set), CSI-IM-ResourceSet (CSI-IM (CSI Interference Measurement) resource set), CSI-SSB-ResourceSet (synchronization signal block (SSB) resource set).

The NZP-CSI-RS-ResourceSet may be used for channel measurement and/or interference measurement; the CSI-IM-ResourceSet may be used for interference measurement; and the CSI-SSB-ResourceSet may be used for channel measurement.

The CSI-ResourceConfig and/or NZP-CSI-RS-ResourceSet may configure one or more NZP CSI-RS resource sets. Each NZP CSI-RS resource set may include K (K≥1) NZP CSI-RS resources.

For example, the network device sends a CSI resource configuration (CSI resource setting) to the terminal device via an RRC message, each CSI resource setting includes S (S≥1, and S is an integer) CSI resource sets, and the each CSI resource set includes K (K≥1, and K is an integer) NZP-CSI-RS resources. The terminal device may receive CSI-RS on the K NZP-CSI-RS resources indicated by the network device.

In summary, a measurement resource may be a CSI resource setting, a CSI resource set, or a CSI resource. Herein, a CSI resource setting may include at least one CSI resource set, a CSI resource set may include at least one CSI resource, and a CSI resource may include at least one of a CSI-RS resource, a CSI-IM resource, or an SSB resource. The CSI-RS resource may be used for channel measurement and/or interference measurement; the CSI-IM resource may be used for interference measurement; and the SSB resource may be used for channel measurement.

Additionally, the measurement resource may be categorized as a channel measurement resource (CMR) and an interference measurement resource (IMR), where the channel measurement resource refers to a measurement resource used for channel measurement, and the interference measurement resource refers to a measurement resource used for interference measurement.

### [Time-domain behavior (time domain behavior)]

The time-domain behavior may include periodic, semi-persistent, and aperiodic. Take an example of CSI-RS for explanation below.

A time-domain behavior of CSI-RS includes periodic CSI-RS, aperiodic CSI-RS, and non-semi-persistent CSI-RS, and the time-domain behavior of CSI-RS may be indicated via a higher-layer parameter (such as resource type (resourceType)).

For the periodic CSI-RS, after the network device configures information of the periodic CSI-RS and the configuration takes effect, the network device periodically sends the CSI-RS to the terminal device.

For the aperiodic CSI-RS, after the network device configures information of the aperiodic CSI-RS, the network device does not send the CSI-RS immediately, but first sends a signaling to notify the terminal device, and then sends the aperiodic CSI-RS to the terminal device.

For the non-semi-persistent CSI-RS, after the network device configures information of the semi-persistent CSI-RS, the network device does not send the CSI-RS immediately, but first sends a signaling to notify the terminal device, and then, after the activation signaling takes effect, the network device sends the semi-persistent CSI-RS to the terminal device. Herein, once the network device triggers the sending of the semi-persistent CSI-RS, it will periodically send the CSI-RS, unless the network device delivers a deactivation signaling.

The time-domain behavior of CSI reporting includes periodic CSI reporting, aperiodic CSI reporting, semi-persistent CSI reporting carried on a physical uplink control channel (PUCCH), and semi-persistent CSI reporting carried on a physical uplink shared channel (PUSCH), and the time-domain behavior of CSI reporting may be indicated via the higher-layer parameter (such as report configuration type (reportConfigType)).

For the aperiodic CSI reporting and semi-persistent CSI reporting carried on the PUSCH, the network device also configures a higher-layer parameter TriggerState and a higher-layer parameter reportTriggerSize to be used in conjunction with a CSI request field in downlink control information (DCI).

For the periodic CSI reporting, after the periodic CSI-RS Resource and a Report parameter are configured via an RRC message (or RRC signaling), it takes effect immediately, without requiring activation or triggering of CSI-RS sending and CSI reporting via MAC-CE or DCI.

For the semi-persistent CSI reporting carried on the PUCCH, if a semi-persistent CSI-RS sending is configured via the RRC message, it is necessary to first activate the CSI-RS sending via MAC CE1, and then activate the CSI reporting via MAC CE2; if the periodic CSI-RS sending is configured via the RRC message, it is not necessary to activate the CSI-RS sending via MAC CE1, but only to activate the CSI reporting via MAC CE2.

For the semi-persistent CSI reporting carried on the PUSCH, if a semi-persistent CSI-RS sending is configured via an RRC message, it is necessary to first activate the CSI-RS sending via MAC CE1, and then trigger the CSI reporting via DCI; if the periodic CSI-RS reporting is configured via the RRC message, it is not necessary to activate the CSI-RS sending via MAC CE1, but only to trigger the CSI reporting via DCI.

It should be noted that, for the DCI, the DCI may be DCI format 0_1 scrambled with SP-CSI-RNTI (semi-persistent CSI RNTI), and a CSI request field in the DCI may associate a corresponding trigger state (TriggerState) through a setting of a codepoint, where the TriggerState defines an associated CSI-ReportConfig, so that the CSI-ReportConfig associated with the semi-persistent CSI reporting on the PUSCH may be found through the TriggerState.

For the aperiodic CSI reporting, the aperiodic CSI reporting is triggered by the DCI, and the process thereof is similar to the above semi-persistent CSI reporting. When a codepoint of a CSI request field in DCI format 0_1/0_2 is used to associate a corresponding TriggerState, unlike the DCI triggering in the above semi-persistent CSI reporting, if the CSI request field has a value of 0, it represents that no semi-periodic CSI reporting is required to be triggered; if the CSI request field has a value of 1, it represents that the aperiodic CSI report associated with TriggerState 1 is triggered, and so on.

### [CSI reporting band]

A report frequency configuration information (reportFreqConfiguration) in the CSI-ReportConfig is used to indicate a frequency granularity of CSI reporting.

A CSI reporting setting configuration may define the CSI reporting band as a subset of subbands in a bandwidth part (BWP). That is, an active BWP may be divided into a plurality of subbands, and a subset (i.e., a part of subbands) of the plurality of subbands may be defined as the CSI reporting band.

Optionally, reportFreqConfiguration may indicate that csi-ReportingBand is a continuous or noncontinuous subset of subbands in the BWP for which CSI should be reported.

Optionally, the reportFreqConfiguration may indicate that a wideband CQI reporting or a subband CQI reporting may be configured by a higher-layer parameter (such as a CQI format indicator (cqi-FormatIndicator)). When the wideband CQI reporting is configured, a wideband CQI is reported for each codeword of an entire CSI reporting band. When the subband CQI reporting is configured, a CQI of each codeword is reported for each subband in the CSI reporting band.

Optionally, the reportFreqConfiguration may indicate that a wideband PMI reporting or a subband PMI reporting may be configured by a higher-layer parameter (such as a PMI format indicator (pmi-FormatIndicator)). When the wideband PMI reporting is configured, a wideband PMI is reported for an entire CSI reporting band. When the subband PMI reporting is configured, other than 2 antenna ports, a single wideband indication is reported for the entire CSI reporting band, and one subband indication is reported for each subband in the CSI reporting band. When the subband PMI is configured with 2 antenna ports, a PMI is reported for each subband in the CSI reporting band.

### [CSI reference resource]

It should be noted that, the CSI reporting corresponds to a CSI reference resource. When the network device configures at least one measurement resource for CSI measurement to the terminal device, the at least one measurement resource may include a CSI reference resource corresponding to the CSI reporting and a measurement resource associated with the CSI reporting.

For example, for the periodic CSI report, CSI is reported periodically, and each CSI reporting corresponds to a CSI reference resource.

The CSI reference resource may be a block of time-frequency resource. Time domain of the CSI reference resource may be a slot, and frequency domain of the CSI reference resource may be a frequency granularity of CSI measurement. For example, when CSI is the subband measurement, the frequency domain of the CSI reference resource is a subband; when CSI is the wideband measurement, the frequency domain of the CSI reference resource is a wideband.

When an uplink slot in which CSI reporting is located is a slot *n*' (n' representing a slot index), a downlink slot in which the CSI reference resource is located is a slot $n - {n}_{CSI _ ref} - {K}_{offset} ⋅ \frac{{2}^{{μ}_{DL}}}{{2}^{{μ}_{{K}_{offset}}}}$; K_{offset} represents a parameter configured by a higher layer, *µ_{K_{offset}}* represents a subcarrier spacing configuration in frequency range 1 and K_{offset} = 0, and *µ_{DL}* represents a downlink subcarrier spacing configuration.

Since the CSI reference resource is a downlink resource, the time domain of the CSI reference resource is a downlink slot. In this way, a slot n represents a downlink slot corresponding to a slot n', and is calculated as follows:
$n = n ′ ⋅ \left⌊\frac{{2}^{{μ}_{DL}}}{{2}^{{μ}_{UL}}}\right⌋ + \left⌊\left(\frac{{N}_{slot , offset , UL}^{CA}}{{2}^{{μ}_{offset , UL}}}-\frac{{N}_{slot , offset , DL}^{CA}}{{2}^{{μ}_{offset , DL}}}\right)⋅{2}^{{μ}_{DL}}\right⌋ ;$

Herein, *µ_{UL}* represents an uplink subcarrier spacing configuration, ${N}_{slot , offset , DL}^{CA}$ and ${μ}_{offset , DL}$ represent a downlink slot offset, and ${N}_{slot , offset , UL}^{CA}$ and 2*^{µ_{offset,UL}}* represent an uplink slot offset.

*n_{CSI_ref}* represents a slot offset between a slot *n* and a valid downlink slot in which a CSI reference resource is located.

For the periodic or non-persistent CSI reporting, if the CSI reporting is associated with a channel measurement resource (such as a CSI-RS/SSB for channel measurement), *n_{CSI_ref}* is a minimum value among values greater than or equal to 4 · 2^{µ_{DL}} such that the CSI reference resource corresponding to the CSI reporting is located at a valid downlink slot.

For example, assume that the uplink and downlink subcarrier spacing configurations are the same, i.e., *µ_{DL} = µ_{UL}* = 0. Start from a minimum value among values greater than or equal to 4 · 2^{µ_{DL}}, set *n_{CSI_ref}* to 4 · 2^{µ_{DL}}, calculate $n - {n}_{{CSI}_{ref}} - {K}_{offset} ⋅ \frac{{2}^{{μ}_{DL}}}{{2}^{{μ}_{{K}_{offset}}}} = n - 4$, and judge whether slot *n* - 4 is a valid downlink slot. If slot *n* - 4 is a valid downlink slot, the CSI reference resource is located at slot *n* - 4; if slot *n* - 4 is not a valid downlink slot, set *n_{CSI_ref}* to 5 · 2^{µ_{DL}}, calculate $n - {n}_{{CSI}_{ref}} - {K}_{offset} ⋅ \frac{{2}^{{μ}_{DL}}}{{2}^{{μ}_{{K}_{offset}}}} =$ *n* - 5, and judge whether slot *n* - 5 is a valid downlink slot. If slot *n* - 5 is a valid downlink slot, the CSI reference resource is located at slot *n* - 5; if slot *n* - 5 is not a valid downlink slot, continue to search forward until a valid downlink slot is found.

For the periodic or non-persistent CSI reporting, if the CSI reporting is associated with a plurality of channel measurement resources (such as a plurality of CSI-RS/SSB are used for channel measurement), *n_{CSI_ref}* is a minimum value among values greater than or equal to 5 · 2^{µ_{DL}} such that the CSI reference resource corresponding to the CSI reporting is located at a valid downlink slot.

For aperiodic, if the DCI used for triggering the CSI reporting is in a same slot as the CSI reporting, the CSI reference resource is located in the slot in which the DCI is located; otherwise, *n_{CSI_ref}* is a minimum value among values greater than or equal to $\left⌊Z′/{N}_{symb}^{slot}\right⌋$ such that the CSI reference resource corresponding to the CSI reporting is located at a valid downlink slot, ${N}_{symb}^{slot}$ represents a number of symbols contained in a slot, and Z' represents processing time for CSI calculation.

It should be noted that, whether a downlink slot is a "valid downlink slot" needs to satisfy following conditions: the downlink slot including at least a downlink symbol or a flexible symbol configured via a higher-layer signaling; and/or, the downlink slot being not within a configured measurement gap.

The CSI reference resource may have two functions as follows.

### Function 1: used for calculating a channel quality indicator (CQI)

Channel measurement essentially depends on implementation of the terminal device. For example, some terminal devices have very strong capabilities and may implement a target block error rate (BLER) requirement at SINR=10dB adopting a certain modulation and coding scheme (MCS). However, some terminal devices have weaker capabilities and require a SINR = 12dB to satisfy the target BLER (the target BLER is configured by the network device) requirement. Therefore, if both two terminal devices measure a SINR of 10dB, the two terminal devices should give different values when feeding back the CQI.

Furthermore, even for a same terminal device, different packet sizes TBS may also result in different BLERs. For example, SINR = 10dB. If a currently transmitted TBS is 1000 bits, a specific MCS is selected for transmission, and its BLER is 0.01. If a TBS of 500 bits is adopted and the same MCS is selected for transmission, its corresponding BLER may be 0.1. The two are different.

Therefore, when quantizing the CQI, a concept such as a CSI reference resource is required, so that the network device may know the condition under which the CQI of the terminal device is calculated through the CSI reference resource.

Assume that the terminal device performs channel measurement using CSI-RS and obtains the channel state, e.g., SINR. The terminal device assumes that a downlink packet is transmitted on the CSI reference resource, and the corresponding channel state is obtained from the CSI-RS measurement. At this time, the terminal device selects a CQI from a CQI table, where the CQI may enable the BLER of the assumedly transmitted downlink packet to be less than the target BLER when transmitted under the measured channel state.

### Function 2: used for determining a measurement resource associated with the CSI reporting

The network device may configure at least one measurement resource for CSI measurement to the terminal device, where the at least one measurement resource may include a CSI reference resource corresponding to the CSI reporting and the measurement resource associated with the CSI reporting. Herein, the time-domain position of the measurement resource associated with the CSI reporting may be located before the CSI reference resource corresponding to the CSI reporting. That is, a measurement resource located before the CSI reference resource corresponding to the CSI reporting may serve as a measurement resource associated with the CSI reporting, and as for which measurement resources may serve as the measurement resource associated with the CSI reporting, it may be configured via a higher-layer signaling, specified by a protocol, pre-configured, or determined by the terminal device itself, etc.

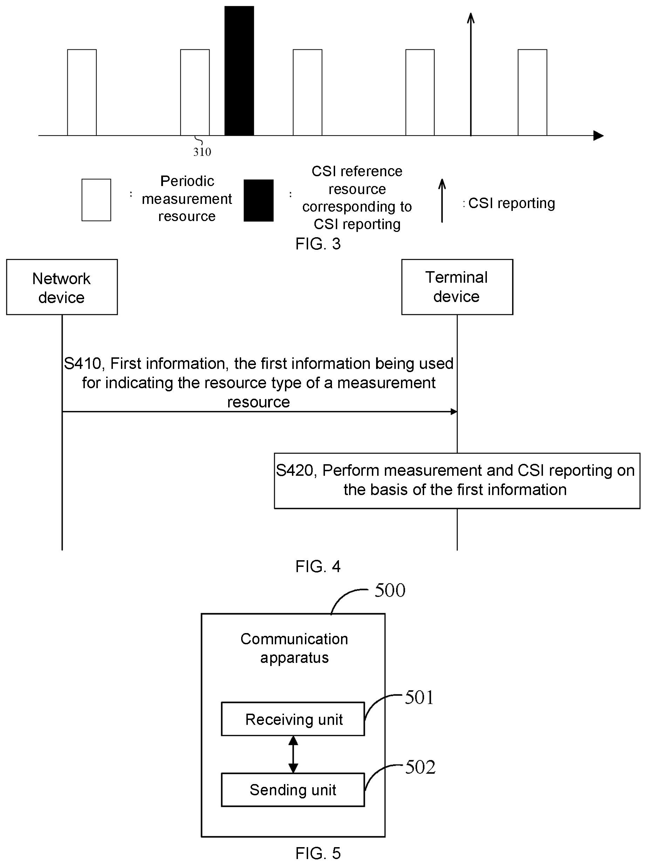

For example, taking an example of a periodic measurement resource, as shown in FIG. 3, the periodic measurement resource includes a measurement resource associated with the CSI reporting, and a time-domain position of the measurement resource associated with the CSI reporting is located before a CSI reference resource corresponding to the CSI reporting. That is, only the measurement resource before the CSI reference resource corresponding to the CSI reporting may possibly serve as the measurement resource associated with the CSI reporting, and as for which resource measurement or resource measurements may serve as the measurement resource associated with the CSI reporting, it may be further configured by the network via a higher-layer signaling. For example, the network may configure a resource measurement 310 that is the latest/adjacent to the CSI reference resource as the measurement resource associated with the CSI reporting.

### 4. CSI measurement/CSI reporting

In a CSI measurement/CSI reporting process, in order to ensure that a channel measurement result or an interference measurement result measured from the measurement resource may separately reflect a certain resource type, so that the network may perform accurate channel estimation or interference estimation for the certain resource type separately. The present embodiment will be specifically explained below from the following a plurality of schemes. Herein, respective schemes may be independent with each other, or may be combined and associated with each other, and the same contents in different schemes may be referred to each other, which will not be repeated specifically.

### [Scheme 1]

In "Scheme 1", in the present embodiment, it is considered that the measurement resource configured for the CSI measurement belongs to one resource type among a plurality of resource types; because the measurement resource configured for the CSI measurement includes a measurement resource associated with the CSI reporting, the measurement resource associated with the CSI reporting also belongs to the same one resource type.

Thus, since a channel measurement result or an interference measurement result of CSI reporting is obtained by performing channel measurement or interference measurement according to the measurement resource associated with the CSI reporting, therefore, when the measurement resource configured for the CSI measurement belongs to one resource type, the channel measurement result or the interference measurement result of the CSI reporting may separately reflect the same one resource type.

Optionally, the one resource type to which the measurement resource configured for the CSI measurement belongs is configured by the network.

For example, taking an example of interaction between the network device and the terminal device, the network device sends first information, where the first information is used for indicating, from a plurality of resource types, one resource type to which the measurement resource configured for CSI measurement belongs. Correspondingly, the terminal device receives the first information. Herein, the first information may be carried via the higher-layer signaling (such as an RRC signaling, an MAC signaling)/DCI, etc.

The present embodiment is explained below by taking an example in which the plurality of resource types include a first resource type and a second resource type, and the measurement resource configured for the CSI measurement belongs to the first resource type or the second resource type.

The first resource type is one resource type among the plurality of resource types. For example, the first resource type may be SBFD, non-overlapping full duplex, or different uplink-downlink slot configurations for different frequency-domain resources on a same TDD carrier.

The second resource type is one resource type among the plurality of resource types, and the second resource type is different from the first resource type. For example, the second resource type may be non-SBFD, overlapping full duplex, or a same uplink-downlink slot configuration for different frequency-domain resources on the same TDD carrier.

For the measurement resource configured for the CSI measurement, taking an example of interaction between the network device and the terminal device, the network device sends information for configuring at least one measurement resource used for the CSI measurement; correspondingly, the terminal device receives the information, and acquires the at least one measurement resource according to the information. The network device sends first information, where the first information is used for indicating, from the plurality of resource types, one resource type to which the at least one measurement resource belongs; correspondingly, the terminal device receives the first information. Herein, the at least one measurement resource belongs to the first resource type or the second resource type, ensuring that the at least one measurement resource belongs to a same resource type. Simultaneously, since the at least one measurement resource belongs to the same resource type, and the at least one measurement resource includes a measurement resource associated with CSI reporting, the measurement resource associated with CSI reporting also belongs to the same one resource type.

Optionally, a time-frequency domain position of the at least one measurement resource may be configured or indicated by the network via the higher-layer signaling (e.g., the RRC signaling or the MAC signaling)/DCI, and whether the at least one measurement resource belongs to the first resource type or the second resource type is also configured or indicated by the network device via the higher-layer signaling/DCI. Thus, since the same one resource type to which the at least one measurement resource belongs is indicated by the network, this represents that the network expects the terminal device to perform CSI reporting on this resource type of the channel measurement result or the interference measurement result, so that the network may perform accurate channel estimation or interference estimation for the resource type.

For example, taking an example in which the measurement resource is a periodic CSI-RS resource, the network device sends configuration information to the terminal device, where the configuration information is used for configuring a periodic CSI-RS resource. Herein, the configuration information is carried via higher-layer signaling, and the configuration information includes periodic information, offset information, and resource type information; the periodic information and the offset information are used for configuring a time-frequency domain position of the periodic CSI-RS resource, and the resource type information is used for indicating a resource type to which the periodic CSI-RS resource belongs.

Optionally, the at least one measurement resource belonging to the first resource type or the second resource type, refers to that all resource locations (e.g., time-domain positions and/or frequency-domain positions) of the at least one measurement resource are within resources belonging to the first resource type or the second resource type.

It should be noted that, the network configures the time-frequency domain position of the at least one measurement resource and indicates that all time-frequency domain positions of the at least one measurement resource are within resources belonging to the first resource type or the second resource type, thereby implementing configuration/indication of the resource type expected by the network for CSI measurement. Thus, since all resource locations of the measurement resource are within resources of the one resource type, the channel measurement result or the interference measurement result measured from the measurement resource may better reflect the resource type.

For example, taking an example in which the measurement resource is a periodic CSI-RS resource, the network device configures periodic information, offset information, and resource type information to the terminal device. All time-frequency domain positions of the periodic CSI-RS resource configured by the periodic information and the offset information are within resources of the first resource type indicated by the resource type information.

Optionally, the at least one measurement resource belonging to the first resource type or the second resource type, refers to that a part of resource locations (e.g., time-domain positions and/or frequency-domain positions) of the at least one measurement resource are within resources belonging to the first resource type or the second resource type.

It should be noted that, the network may configure the time-frequency domain positions of the at least one measurement resource and indicate that only a part of time-frequency domain positions of the at least one measurement resource are required to be within resources belonging to the first resource type or the second resource type. In this way, although only a part of time-frequency domain positions are within the resources belonging to the first resource type or the second resource type, the terminal device may also use the measurement resources on the part of time-frequency domain positions to perform channel measurement or interference measurement, to reflect one resource type separately, avoiding resource waste caused by discarding measurement resources on all time-frequency domain positions.

Optionally, a resource type to which a channel measurement resource (CMR) among the at least one measurement resource belongs is the same as a resource type to which an interference measurement resource (IMR) among the at least one measurement resource belongs.

It should be noted that, since the at least one measurement resource may include a channel measurement resource and an interference measurement resource, the channel measurement resource is used for channel measurement, and the interference measurement resource is used for interference measurement, therefore, in order to ensure that the channel measurement result and the interference measurement result may separately reflect the same one resource type, the resource type to which the channel measurement resource belongs and the resource type to which the interference measurement resource belongs are required to be the same, i.e., either both the first resource type or both the second resource type.

### [Scheme 2]

In "Scheme 2", in the embodiment, it is considered that the measurement resources configured for the CSI measurement belong to a plurality of resource types, but the measurement resources associated with the CSI reporting belong to one resource type among the plurality of resource types.

In this way, although the measurement resources configured for the CSI measurement belong to the plurality of resource types, since the channel measurement result or the interference measurement result of CSI reporting is obtained by performing channel measurement or interference measurement according to the measurement resources associated with the CSI reporting, as long as the measurement resources associated with the CSI reporting belong to one resource type, the channel measurement result or the interference measurement result of this CSI reporting may also reflect one resource type separately.

Optionally, the plurality of resource types to which the measurement resources configured for the CSI measurement belong are configured by the network.

Optionally, the one resource type to which the measurement resources associated with CSI reporting belong is configured by the network.

For example, taking an example of interaction between the network device and the terminal device, the network device sends first information, where the first information is used for indicating, from the plurality of resource types, the one resource type to which the measurement resources associated with the CSI reporting belong. Correspondingly, the terminal device receives the first information. Herein, the first information may be carried by the higher-layer signaling (such as an RRC signaling, an MAC signaling)/DCI, etc.

The present embodiment is explained below by taking an example in which the plurality of resource types include a first resource type and a second resource type, and the measurement resources associated with the CSI reporting belong to the first resource type or the second resource type.

For the measurement resource configured for the CSI measurement, taking an example of interaction between the network device and the terminal device, the network device sends information for configuring at least one measurement resource used for the CSI measurement; correspondingly, the terminal device receives the information, and acquires the at least one measurement resource according to the information. The network device sends first information, where the first information is used for indicating, from the plurality of resource types, the one resource type to which the measurement resources associated with the CSI reporting belong; correspondingly, the terminal device receives the first information.

Herein, the at least one measurement resource belongs to both the first resource type and the second resource type, the at least one measurement resource includes the measurement resources associated with the CSI reporting, and the measurement resources associated with the CSI reporting belong to the first resource type or the second resource type, so that the measurement resources associated with the CSI reporting belong to one resource type.

Optionally, the at least one measurement resource belonging to both the first resource type and the second resource type is configured or indicated by the network device via higher-layer signaling/DCI. In this way, the network configures the resource type to which the at least one measurement resource belongs.

Optionally, the at least one measurement resource belonging to both the first resource type and the second resource type, refers to that there are both resource locations within resources belonging to the first resource type and resource locations within resources belonging to the second resource type in the at least one measurement resource.

It should be noted that, the network configures the time-frequency domain positions of the at least one measurement resource, and indicates that a part of the time-frequency domain positions of the at least one measurement resource are within resources belonging to the first resource and another part of the time-frequency domain positions are within resources belonging to the second resource, implementing configuration/indication of the plurality of resource types expected by the network for CSI measurement.

Optionally, the measurement resources associated with the CSI reporting belonging to the first resource type or the second resource type is configured or indicated by the network device via higher-layer signaling/DCI.

Thus, since the one resource type to which the measurement resources associated with the CSI reporting belong is indicated by the network, this indicates that the network expects the terminal device to perform CSI reporting on this resource type of the channel measurement result or the interference measurement result, so that the network may perform accurate channel estimation or interference estimation on the resource type.

Optionally, the measurement resources associated with the CSI reporting belonging to the first resource type or the second resource type refers to that all resource locations of the measurement resources associated with the CSI reporting are within resources belonging to the first resource type or the second resource type.

It should be noted that, the network configures the time-frequency domain positions of the measurement resources associated with the CSI reporting, and indicates that all time-frequency domain positions of the measurement resources associated with the CSI reporting are within resources belonging to the first resource type or the second resource type, implementing configuration/indication of the one resource type expected by the network for CSI reporting. In this way, since all resource locations of the measurement resources associated with the CSI reporting are within resources of the one resource type, the channel measurement result or the interference measurement result measured from the measurement resources may better reflect this resource type.

Optionally, the measurement resources associated with the CSI reporting belonging to the first resource type or the second resource type refers to that a part of resource locations of the measurement resources associated with the CSI reporting are within resources belonging to the first resource type or the second resource type.

It should be noted that, the network configures the time-frequency domain positions of the measurement resources associated with the CSI reporting, and indicates that only a part of time-frequency domain positions of the measurement resources associated with the CSI reporting are required to be within resources belonging to the first resource type or the second resource type. In this way, although only the part of time-frequency domain positions among the time-frequency domain positions associated with CSI reporting are within resources belonging to the first resource type or the second resource type, the terminal device may also use the measurement resources on the part of time-frequency domain positions associated with the CSI reporting, to perform channel measurement or interference measurement, to reflect one resource type separately, avoiding resource waste caused by discarding measurement resources on all time-frequency domain positions associated with the CSI reporting.

Optionally, a resource type to which a channel measurement resource (CMR) associated with the CSI reporting belongs is the same as a resource type to which an interference measurement resource (IMR) associated with the CSI reporting belongs.

It should be noted that, since the measurement resources associated with the CSI reporting may include a channel measurement resource and an interference measurement resource, the channel measurement resource is used for channel measurement, and the interference measurement resource is used for interference measurement, therefore, in order to ensure that the channel measurement result and the interference measurement result may separately reflect the same one resource type, the resource type to which the channel measurement resource belongs and the resource type to which the interference measurement resource belongs are required to be the same, i.e., either both the first resource type or both the second resource type.

### [Scheme 3]

Different from the above "Scheme 2", in which the measurement resources associated with the CSI reporting are explicitly configured/explicitly indicated to belong to one resource type among the plurality of resource types, in "Scheme 3", in the present embodiment, it is considered that the measurement resources configured for the CSI measurement belong to a plurality of resource types, and implicitly configures/implicitly indicates that the measurement resources associated with the CSI reporting belong to one resource type among the plurality of resource types.

In a specific implementation, in the present embodiment, the resource type of the measurement resources associated with the CSI reporting may be determined according to the resource type to which one measurement resource among the measurement resources configured for the CSI measurement belongs, thereby implementing implicit configuration/implicit indication.

For example, the resource type to which one channel measurement resource among the measurement resources configured for the CSI measurement belongs is used to implicitly configure/implicitly indicate the resource type of the measurement resources associated with the CSI reporting.

That is, the resource type to which the channel measurement resource belongs is used as the resource type of the measurement resources associated with the CSI reporting, such that the resource type of the measurement resources associated with the CSI reporting is the same as the resource type to which the channel measurement resource belongs, thereby implementing implicit configuration/implicit indication.

Optionally, the plurality of resource types to which the measurement resources configured for the CSI measurement belong are configured by the network. The present embodiment is explained below by taking an example in which the plurality of resource types include a first resource type and a second resource type, and the measurement resources associated with the CSI reporting belong to the first resource type or the second resource type.

For the measurement resource configured for the CSI measurement, taking an example of interaction between the network device and the terminal device, the network device sends at least one measurement resource for CSI measurement; correspondingly, the terminal device acquires the at least one measurement resource.

Herein, the at least one measurement resource belongs to both the first resource type and the second resource type, the at least one measurement resource includes the measurement resources associated with the CSI reporting, the resource type to which the measurement resources associated with the CSI reporting belong is the same as a resource type to which a first measurement resource belongs, the first measurement resource is a channel measurement resource among the at least one measurement resource, and the first measurement resource belongs to the first resource type or the second resource type.

In this way, through the resource type to which the first measurement resource belongs, an implicit configuration/implicit indication is implemented that the measurement resources associated with the CSI reporting belong to the first resource type or the second resource type, such that the measurement resources associated with the CSI reporting belong to the one resource type.

Optionally, the at least one measurement resource belonging to both the first resource type and the second resource type is configured or indicated by the network device via the higher-layer signaling/DCI. In this way, the network configures the resource type to which the at least one measurement resource belongs.

Optionally, the first measurement resource is indicated or configured by the network device via the higher-layer signaling/DCI, or is specified by a protocol, or is determined by the terminal device itself, or is preconfigured.

Optionally, the first measurement resource is a channel measurement resource within a first measurement resource set with a time-domain position that is latest/adjacent to the CSI reference resource corresponding to the CSI reporting; where the first measurement resource set consists of measurement resources among the at least one measurement resource, that are located before the time-domain position of the CSI reference resource corresponding to the CSI reporting.

It should be noted that, in conjunction with the contents in the above "CSI reference resource", the time-domain position of the measurement resource associated with the CSI reporting may be located before the CSI reference resource corresponding to the CSI reporting, that is, a measurement resource located before the CSI reference resource corresponding to the CSI reporting may serve as the measurement resource associated with the CSI reporting. Therefore, in the present embodiment, from the measurement resources among the at least one measurement resource, that are located before the time-domain position of the CSI reference resource corresponding to the CSI reporting, the resource type to which a channel measurement resource (i.e., the first measurement resource) with the time-domain position that is latest/adjacent to the CSI reference resource corresponding to the CSI reporting belongs may be taken as the resource type to which the measurement resources associated with the CSI reporting belong. Simultaneously, the measurement resources associated with the CSI reporting may include the first measurement resource.

Optionally, the first measurement resource is a channel measurement resource with a minimum index/maximum index among the at least one measurement resource.

It should be noted that, each channel measurement resource among the at least one measurement resource has a unique index. Therefore, in the present embodiment, the resource type to which the channel measurement resource (i.e., the first measurement resource) with the minimum index/maximum index among the at least one measurement resource belongs may be taken as the resource type to which the measurement resources associated with the CSI reporting belong, which is easy to implement.

Optionally, the first measurement resource is a channel measurement resource with the minimum index in the first measurement resource set.

It should be noted that, in conjunction with the contents in the above "CSI reference resource", the time-domain position of the measurement resources associated with the CSI reporting may be located before the CSI reference resource corresponding to the CSI reporting, that is, the measurement resources located before the CSI reference resource corresponding to the CSI reporting may serve as the measurement resources associated with the CSI reporting. Therefore, in the present embodiment, from the measurement resources among the at least one measurement resource that are located before the time-domain position of the CSI reference resource corresponding to the CSI reporting, the resource type to which the channel measurement resource (i.e., the first measurement resource) with the minimum index/maximum index belongs may be taken as the resource type to which the measurement resources associated with the CSI reporting belong, which is easy to implement.

Optionally, the resource type to which the channel measurement resources associated with the CSI reporting belongs and the resource type to which the interference measurement resource associated with the CSI reporting belongs are the same.

### [Scheme 4]

In "Scheme 4", the present embodiment further analyzes the valid downlink slot and n_{CSI_ref} based on the above "Scheme 1", "Scheme 2" and "Scheme 3".

In conjunction with the contents in the above "CSI reference resource", it can be known that the CSI reference resource corresponding to the CSI reporting is required to be located in the valid downlink slot. Since the measurement resources associated with the CSI reporting may belong to different resource types, the valid downlink slot is required to be redefined.

Optionally, if the measurement resources associated with the CSI reporting belong to the first resource type, the CSI reference resource corresponding to the CSI reporting is located at a first valid downlink slot; where the first valid downlink slot includes at least one first downlink symbol or at least one first flexible symbol, and/or the first valid downlink slot is not within a measurement gap; the first downlink symbol refers to a downlink symbol belonging to the first resource type, and the first flexible symbol refers to a flexible symbol belonging to the first resource type.

For example, taking an example in which the first resource type is SBFD, the first valid downlink slot includes at least one SBFD downlink symbol or at least one SBFD flexible symbol, and/or the first valid downlink slot is not within the measurement gap.

Optionally, if the measurement resources associated with the CSI reporting belong to the second resource type, the CSI reference resource corresponding to the CSI reporting is located in a second valid downlink slot; where the second valid downlink slot includes at least one second downlink symbol or at least one second flexible symbol, and/or the second valid downlink slot is not within the measurement gap; the second downlink symbol refers to a downlink symbol belonging to the second resource type, and the second flexible symbol refers to a flexible symbol belonging to the second resource type.

For example, taking an example in which the second resource type is non-SBFD, the second valid downlink slot includes at least one non-SBFD downlink symbol or at least one non-SBFD flexible symbol, and/or the second valid downlink slot is not within the measurement gap.

In conjunction with the contents in the above "CSI reference resource", it can be known that the definition of n_{CSI_ref} is related to the CSI reference resource corresponding to CSI reporting located in a valid downlink slot. Since the valid downlink slot is required to be redefined, the n_{CSI_ref} is also required to be redefined. For ease of description, take an example in which n_{CSI_ref} is a first parameter for explanation below. Herein, the first parameter may represent a slot offset between a downlink slot corresponding to an uplink slot where the CSI reporting is located and a first valid downlink slot or a second valid downlink slot.

Optionally, for the measurement resources associated with the CSI reporting belonging to the first resource type, if the CSI reporting is periodic or semi-persistent and the measurement resources associated with the CSI reporting include a channel measurement resource, the first parameter is a minimum value among values greater than or equal to 4 · 2^{µ_{DL}} such that the CSI reference resource corresponding to the CSI reporting is located at the first valid downlink slot.

Optionally, for the measurement resources associated with the CSI reporting belonging to the second resource type, if the CSI reporting is periodic or semi-persistent and the measurement resources associated with the CSI reporting include a channel measurement resource, the first parameter is a minimum value among values greater than or equal to 4 · 2^{µ_{DL}} such that the CSI reference resource corresponding to the CSI reporting is located at the second valid downlink slot.

Optionally, for the measurement resources associated with CSI reporting belonging to the first resource type, if the CSI reporting is periodic or semi-persistent and the measurement resources associated with the CSI reporting include a plurality of channel measurement resources, the first parameter is a minimum value among values greater than or equal to 5 · 2^{µ_{DL}} such that the CSI reference resource corresponding to the CSI reporting is located at the first valid downlink slot.

Optionally, for the measurement resources associated with CSI reporting belonging to the second resource type, if the CSI reporting is periodic or semi-persistent and the measurement resources associated with the CSI reporting include a plurality of channel measurement resources, the first parameter is a minimum value among values greater than or equal to 5 · 2^{µ_{DL}} such that the CSI reference resource corresponding to the CSI reporting is located at the second valid downlink slot.

Optionally, for the measurement resources associated with the CSI reporting belonging to the first resource type, if the CSI reporting is aperiodic and DCI used for triggering the CSI reporting and the CSI reporting are in a same slot, the first valid downlink slot is the slot where the DCI is located.

Optionally, for the measurement resources associated with the CSI reporting belonging to the second resource type, if the CSI reporting is aperiodic and DCI used for triggering the CSI reporting and the CSI reporting are in a same slot, the second valid downlink slot is the slot where the DCI is located.

Optionally, for the measurement resources associated with the CSI reporting belonging to the first resource type, if the CSI reporting is aperiodic and DCI used for triggering the CSI reporting and the CSI reporting are not in a same slot, the first parameter is a minimum value among values greater than or equal to $\left⌊Z′/{N}_{symb}^{slot}\right⌋$ such that the CSI reference resource corresponding to the CSI reporting is located at the first valid downlink slot.

Optionally, for the measurement resources associated with the CSI reporting belonging to the second resource type, if the CSI reporting is aperiodic and DCI used for triggering the CSI reporting and the CSI reporting are not in a same slot, the first parameter is a minimum value among values greater than or equal to $\left⌊Z′/{N}_{symb}^{slot}\right⌋$ such that the CSI reference resource corresponding to the CSI reporting is located at the second valid downlink slot.

### [Scheme 5]

In "Scheme 5", the present embodiment further considers reporting of measurement results (such as channel measurement results and/or interference measurement results) based on the above "Scheme 1", "Scheme 2", "Scheme 3" and "Scheme 4". Herein, a measurement result may be obtained by performing measurement according to the measurement resources associated with the CSI reporting, and the measurement result is carried by the CSI report.

Optionally, a measurement result includes CSI information. Herein, the CSI information may include at least one of: layer 1 reference signal received power (L1-RSRP), layer 1 signal-to-noise and interference ratio (L1-SINR) or CSI-related quantities, etc.

Optionally, a CSI-related parameter may include at least one of: a CSI-RS resource indicator index (CSI-RS resource indicator, CRI), an SS/PBCH block resource indicator index (SS/PBCH block resource indicator, SSBRI), a rank indicator index (RI), a precoding matrix indicator index (precoding matrix indicator, PMI), a CQI, a layer indicator index (layer indicator, LI), a capability index or a time-domain channel property (time-domain channel properties, TDCP), etc.

In a process of reporting the measurement result, the network device may configure one or more CSI reportings to the terminal device, and a measurement resource associated with each CSI reporting belongs to one resource type among the plurality of resource types, and the terminal device may need to report the measurement result obtained by measurement of the measurement resource associated with each CSI reporting to the network device through the CSI reporting.

Since the resource type to which the measurement resource associated with each CSI reporting belongs may be the same or different, and measurement results obtained by measurement of measurement resources of different resource types will also be different.

The present embodiment is explained by taking an example in which the plurality of resource types include a first resource type and a second resource type, and the CSI report includes a first measurement result and/or a second measurement result below.

For the measurement resource configured for the CSI measurement, taking an example of interaction between the network device and the terminal device, the network device sends at least one measurement resource for the CSI measurement; correspondingly, the terminal device acquires the at least one measurement resource.

If the at least one measurement resource includes a second measurement resource, the second measurement resource belongs to the first resource type, and the second measurement resource is associated with the first CSI reporting, the terminal device may perform measurement, according to the second measurement resource, to obtain a first measurement result, and send a CSI report to the network device, and the CSI report includes the first measurement result. Thus, network device, after acquiring the first measurement result, may perform accurate channel estimation or interference estimation on the first resource type according to the first measurement result.

If the at least one measurement resource includes a third measurement resource, the third measurement resource belongs to a second resource type, and the third measurement resource is associated with a second CSI reporting, the terminal device may perform measurement, according to the third measurement resource, to obtain a second measurement result, and send a CSI report to the network device, and the CSI report includes the second measurement result. Thus, after the network device acquires the second measurement result, the network device may perform accurate channel estimation or interference estimation on the first resource type according to the second measurement result.

If the at least one measurement resource includes the second measurement resource and the third measurement resource, the terminal device may perform measurement, according to the second measurement resource, to obtain a first measurement result, and perform measurement, according to the third measurement resource, to obtain a second measurement result. At this time, the terminal device may send CSI reports in two separate times, one CSI report includes the first measurement result, and the other CSI report includes the second measurement result. Additionally, to save signaling/resource overhead, the terminal device may send one CSI report, and the CSI report includes the first measurement result and the second measurement result. Since the first measurement result and the second measurement result may each separately reflect one resource type, therefore, after the network device acquires the first measurement result and the second measurement result, the network device may perform accurate channel estimation or interference estimation on the first resource type according to the first measurement result, and perform accurate channel estimation or interference estimation on the second resource type according to the second measurement result.

### 5. Example explanation of a communication method

In conjunction with the above contents, an interaction between the network device and the terminal device is taken as an example to exemplarily introduce a communication method of the embodiments of the present disclosure below. Herein, the terminal device may be a chip, a chip module, or a communication module, etc., and the network device may be a chip, a chip module, or a communication module, etc.

As shown in FIG. 4, FIG. 4 is a flow schematic diagram of a communication method of the embodiments of the present disclosure, and specifically includes: S410 to S420 as follows.

In S410, a network device sends first information, where the first information is used for indicating a resource type of a measurement resource.

Correspondingly, a terminal device receives the first information.

In S420, a terminal device performs measurement according to the first information and reports CSI.

It can be seen that, in the present embodiment, the resource type of the measurement resource associated with the CSI reporting being indicated by the first information, is implemented. Since the channel measurement result or the interference measurement result of the CSI reporting is obtained by performing channel measurement or interference measurement according to the measurement resource associated with the CSI reporting, therefore, when the measurement resource associated with the CSI reporting belongs to one resource type, the channel measurement result or the interference measurement result of the CSI reporting may separately reflect one resource type. Thus, after the network device acquires the channel measurement result or the interference measurement result, the network device may perform accurate channel estimation or interference estimation for one resource type separately, so as to adapt to a scenario where the network expects to only perform channel estimation or interference estimation for one resource type.

In conjunction with the above contents, some possible implementations are further explained below, and for other implementations not explained, reference may be made to the above contents, which will not be repeated herein.

Optionally, the first information is carried by the higher-layer signaling (such as the RRC signaling, the MAC signaling, etc.)/DCI.

Optionally, the first information being used for indicating the resource type of the measurement resource includes: the first information being used for indicating, from a plurality of resource types, a resource type to which at least one measurement resource for CSI measurement belongs; or the first information being used for indicating, from a plurality of resource types, a resource type to which a measurement resource associated with CSI reporting belongs, where the measurement resource associated with the CSI reporting is among the at least one measurement resource.

It can be seen that, in the present embodiment, it is considered that at least one measurement resource for the CSI measurement belongs to one resource type among the plurality of resource types, so that the measurement resource configured for the CSI measurement belongs to the one resource type. Since the measurement resource configured for the CSI measurement includes the measurement resources associated with the CSI reporting, the measurement resource associated with the CSI reporting also belongs to the same one resource type.

Alternatively, in the present embodiment, it is considered that at least one measurement resource for the CSI measurement belongs to the plurality of resource types, so that the measurement resource configured for the CSI measurement belongs to the plurality of resource types, but a measurement resource associated with the CSI reporting belongs to one resource type among the plurality of resource types.

Since the channel measurement result or the interference measurement result of the CSI reporting is obtained by performing channel measurement or interference measurement according to the measurement resource associated with the CSI reporting, therefore, when the measurement resource associated with the CSI reporting belongs to one resource type, the channel measurement result or the interference measurement result of the CSI reporting may separately reflect one resource type. Thus, after the network device acquires the channel measurement result or the interference measurement result, the network device may perform accurate channel estimation or interference estimation for one resource type separately, so as to adapt to a scenario where the network expects to only perform channel estimation or interference estimation for one resource type.

Optionally, the resource type to which the channel measurement resource among the at least one measurement resource belongs is the same as the resource type to which an interference measurement resource among the at least one measurement resource belongs; or
the resource type to which the channel measurement resource associated with the CSI reporting belongs is the same as the resource type to which the interference measurement resource associated with the CSI reporting belongs.

Optionally, the resource type to which the measurement resource associated with the CSI reporting belongs is the same as the resource type to which the first measurement resource belongs, where the first measurement resource is one channel measurement resource among at least one measurement resource;
the first measurement resource belongs to the first resource type or the second resource type.

Optionally, the first measurement resource is a channel measurement resource within a first measurement resource set with a time-domain position that is latest to the CSI reference resource corresponding to the CSI reporting; or
the first measurement resource is a channel measurement resource with a minimum index among the at least one measurement resource; or
the first measurement resource is a channel measurement resource with a minimum index in the first measurement resource set;
the first measurement resource set consists of measurement resources among at least one measurement resource, that are located before the time-domain position of the CSI reference resource corresponding to the CSI reporting.

Optionally, if the measurement resource associated with the CSI reporting belongs to the first resource type, a CSI reference resource corresponding to the CSI reporting is located at a first valid downlink slot;
the first valid downlink slot includes at least one first downlink symbol or at least one first flexible symbol, and/or the first valid downlink slot is not within a measurement gap;
the first downlink symbol refers to a downlink symbol belonging to the first resource type;
the first flexible symbol refers to a flexible symbol belonging to a first resource type.

Optionally, if the measurement resource associated with the CSI reporting belongs to the second resource type, the CSI reference resource corresponding to the CSI reporting is located at the second valid downlink slot;
the second valid downlink slot includes at least one second downlink symbol or at least one second flexible symbol, and/or the second valid downlink slot is not within the measurement gap;
the second downlink symbol refers to a downlink symbol belonging to the second resource type;
the second flexible symbol refers to a flexible symbol belonging to the second resource type.

Optionally, if CSI reporting is periodic or semi-persistent, and the measurement resources associated with the CSI reporting includes a channel measurement resource, a first parameter is a minimum value among values greater than or equal to 4 · 2^{µ_{DL}} such that the CSI reference resource corresponding to the CSI reporting is located at the first valid downlink slot or the second valid downlink slot; or
if the CSI reporting is periodic or semi-persistent and the measurement resources associated with the CSI reporting include a plurality of channel measurement resources, the first parameter is a minimum value among values greater than or equal to 5 · 2^{µ_{DL}} such that the CSI reference resource corresponding to the CSI reporting is located at the first valid downlink slot or the second valid downlink slot;
the first parameter represents a slot offset between a downlink slot corresponding to an uplink slot where the CSI reporting is located and the first valid downlink slot or the second valid downlink slot;
µ_{DL} represents the downlink subcarrier spacing.

Optionally, if the CSI reporting is aperiodic, and downlink control information (DCI) used for triggering the CSI reporting and the CSI reporting are in a same slot, the first valid downlink slot or the second valid downlink slot is the slot where the DCI is located; or
if the CSI reporting is aperiodic, and the DCI used for triggering the CSI reporting and the CSI reporting are not in a same slot, the first parameter is a minimum value among values greater than or equal to $\left⌊Z′/{N}_{symb}^{slot}\right⌋$ such that the CSI reference resource corresponding to the CSI reporting is located at the first valid downlink slot or the second valid downlink slot;
the first parameter represents an offset between a downlink slot corresponding to an uplink slot where the CSI reporting is located and the first valid downlink slot or the second valid downlink slot;
${N}_{symb}^{slot}$ represents a number of symbols contained in a slot, and Z' represents a processing time for CSI calculation.

Optionally, in S420, the method further includes the following steps.

The terminal device sends a CSI report, where the CSI report includes a first measurement result and/or a second measurement result; the first measurement result is obtained by measuring a second measurement resource among the at least one measurement resource, where the second measurement resource belongs to the first resource type, and the second measurement resource is associated with the first CSI reporting; the second measurement result is obtained by measuring a third measurement resource among the at least one measurement resource, where the third measurement resource belongs to a second resource type, and the third measurement resource is associated with the second CSI reporting.

Correspondingly, after sending the at least one measurement resource, the method further includes the following steps.

The network device receives the CSI report.

Optionally, the plurality of resource types include SBFD and non-SBFD.

Optionally, the first resource type includes SBFD, and the second resource type includes non-SBFD.

### III. Example explanation of functional units of a communication apparatus

### [Description]

The above mainly introduces the solutions of the embodiments of the present disclosure from the perspective of method sides. It can be understood that, in order to implement the above functions, a terminal device contains corresponding hardware structures and/or software modules for performing various functions. Those skilled in the art should easily realize that, in conjunction with the exemplary units and algorithm steps described in the embodiments disclosed herein, the present disclosure can be implemented in the form of hardware or a combination of hardware and computer software. Whether a certain function is performed by hardware or by computer software driving hardware, depends on a specific application and a design constraint condition of the technical solution. Those skilled in the art may use different methods to implement the described functions, for each specific application, but such an implementation should not be considered beyond the scope of the present disclosure.

In the embodiments of the present disclosure, division of functional units of the terminal device may be performed according to the above method examples. For example, various functional units may be divided corresponding to various functions, or two or more functions may also be integrated into a processing module. The above integrated unit may be implemented in the form of hardware or may be implemented in the form of a software program module. It should be noted that, the division of units in the embodiments of the present disclosure is schematic, which is only a logical functional division, and there may be other divisions in actual implementations.

In a case where an integrated unit is adopted, FIG. 5 is a block diagram of components of functional units of a communication apparatus of the embodiments of the present disclosure. Herein, the communication apparatus 500 includes a receiving unit 501 and a sending unit 502.

Optionally, the receiving unit 501 may be a module unit configured to acquire and process signals, information, etc., which is not specifically limited thereto.

Optionally, the sending unit 502 may be a module unit configured to send and process signals, information, etc., which is not specifically limited thereto.

Optionally, the communication apparatus 500 may further include a storage unit, configured to store computer program codes or instructions executable by the communication apparatus 500. Herein, the storage unit may be a memory.

Optionally, the communication apparatus 500 may be a chip or a chip module.

Optionally, the receiving unit 501 and the sending unit 502 may be integrated into a communication unit. Herein, the communication unit may be a communication interface, a transceiver, a transceiver circuit, etc.

Optionally, the receiving unit 501 or the sending unit 502 may be integrated into a processing unit.

It should be noted that, the processing unit may be a processor or a controller, for example, may be a baseband processor, a baseband chip, a central processing unit (CPU), a general-purpose processor, a digital signal processor (DSP), an application-specific integrated circuit (ASIC), a field programmable gate array (FPGA) or other programmable logic devices, transistor logic devices, hardware components, or any combination thereof. It may implement or execute various illustrative logical blocks, modules and circuits described in conjunction with the disclosed contents of the present disclosure. The processing unit may also be a combination that implements computing functions, for example, containing a combination of one or more microprocessors, a combination of a digital signal processor (DSP) and a microprocessor, or the like.

Optionally, the communication apparatus 500 is configured to perform any one of the steps performed by the terminal device/chip/chip module, etc., in the above method embodiments.

In actual implementation, the receiving unit 501 and the sending unit 502 are configured to perform any one of the steps in the above method embodiments, and upon executing actions such as sending, etc., other units may be selectively invoked to complete corresponding operations. A detailed explanation is given below.

The receiving unit 501, is configured to receive first information, where the first information is used for indicating a resource type of a measurement resource;
the sending unit 502, is configured to perform measurement and report CSI according to the first information.

It can be seen that, in the present embodiment, the resource type of the measurement resource associated with the CSI reporting being indicated by the first information, is implemented. Since the channel measurement result or the interference measurement result of the CSI reporting is obtained by performing channel measurement or interference measurement according to the measurement resource associated with the CSI reporting, therefore, when the measurement resource associated with the CSI reporting belongs to one resource type, the channel measurement result or the interference measurement result of the CSI reporting may separately reflect one resource type. Thus, after the network device acquires the channel measurement result or the interference measurement result, the network device may perform accurate channel estimation or interference estimation for one resource type separately, so as to adapt to a scenario where the network expects to only perform channel estimation or interference estimation for one resource type.

It should be noted that, for the specific implementations of various operations in the embodiments described in FIG. 5, reference may be made to the descriptions of the method embodiments shown above in detail, which will not be specifically repeated herein.

### [Some possible implementations]

Optionally, the first information being used for indicating the resource type of the measurement resource includes: the first information being used for indicating, from a plurality of resource types, a resource type to which at least one measurement resource for CSI measurement belongs; or the first information being used for indicating, from a plurality of resource types, a resource type to which a measurement resource associated with CSI reporting belongs, where the measurement resource associated with the CSI reporting is among the at least one measurement resource.

Optionally, the resource type to which the channel measurement resource among the at least one measurement resource belongs is the same as the resource type to which an interference measurement resource among the at least one measurement resource belongs; or
the resource type to which the channel measurement resource associated with the CSI reporting belongs is the same as the resource type to which the interference measurement resource associated with the CSI reporting belongs.

Optionally, the resource type to which the measurement resource associated with the CSI reporting belongs is the same as the resource type to which the first measurement resource belongs, where the first measurement resource is one channel measurement resource among at least one measurement resource;
the first measurement resource belongs to the first resource type or the second resource type.

Optionally, the first measurement resource is a channel measurement resource within a first measurement resource set with a time-domain position that is latest to the CSI reference resource corresponding to the CSI reporting; or
the first measurement resource is a channel measurement resource with a minimum index among the at least one measurement resource; or
the first measurement resource is a channel measurement resource with a minimum index in the first measurement resource set;
the first measurement resource set consists of measurement resources among at least one measurement resource, that are located before the time-domain position of the CSI reference resource corresponding to the CSI reporting.

Optionally, if the measurement resource associated with the CSI reporting belongs to the first resource type, a CSI reference resource corresponding to the CSI reporting is located at a first valid downlink slot;
the first valid downlink slot includes at least one first downlink symbol or at least one first flexible symbol, and/or the first valid downlink slot is not within a measurement gap;
the first downlink symbol refers to a downlink symbol belonging to the first resource type;
the first flexible symbol refers to a flexible symbol belonging to a first resource type.

Optionally, if the measurement resource associated with the CSI reporting belongs to the second resource type, the CSI reference resource corresponding to the CSI reporting is located at the second valid downlink slot;
the second valid downlink slot includes at least one second downlink symbol or at least one second flexible symbol, and/or the second valid downlink slot is not within the measurement gap;
the second downlink symbol refers to a downlink symbol belonging to the second resource type;
the second flexible symbol refers to a flexible symbol belonging to the second resource type.

Optionally, if CSI reporting is periodic or semi-persistent, and the measurement resources associated with the CSI reporting includes a channel measurement resource, a first parameter is a minimum value among values greater than or equal to 4 · 2^{µ_{DL}} such that the CSI reference resource corresponding to the CSI reporting is located at the first valid downlink slot or the second valid downlink slot; or,

if the CSI reporting is periodic or semi-persistent and the measurement resources associated with the CSI reporting include a plurality of channel measurement resources, the first parameter is a minimum value among values greater than or equal to 5 · 2^{µ_{DL}} such that the CSI reference resource corresponding to the CSI reporting is located at the first valid downlink slot or the second valid downlink slot;
the first parameter represents a slot offset between a downlink slot corresponding to an uplink slot where the CSI reporting is located and the first valid downlink slot or the second valid downlink slot;
µ_{DL} represents the downlink subcarrier spacing.

Optionally, if the CSI reporting is aperiodic, and downlink control information (DCI) used for triggering the CSI reporting and the CSI reporting are in a same slot, the first valid downlink slot or the second valid downlink slot is the slot where the DCI is located; or
if the CSI reporting is aperiodic, and the DCI used for triggering the CSI reporting and the CSI reporting are not in a same slot, the first parameter is a minimum value among values greater than or equal to $\left⌊Z′/{N}_{symb}^{slot}\right⌋$ such that the CSI reference resource corresponding to the CSI reporting is located at the first valid downlink slot or the second valid downlink slot;
the first parameter represents an offset between a downlink slot corresponding to an uplink slot where the CSI reporting is located and the first valid downlink slot or the second valid downlink slot;
${N}_{symb}^{slot}$ represents a number of symbols contained in a slot, and *Z'* represents a processing time for CSI calculation.

Optionally, in terms of reporting the CSI, a sending unit 502 is configured to:
send a CSI report, where the CSI report includes a first measurement result and/or a second measurement result; the first measurement result is obtained by measuring a second measurement resource among the at least one measurement resource, where the second measurement resource belongs to the first resource type, and the second measurement resource is associated with the first CSI reporting; the second measurement result is obtained by measuring a third measurement resource among the at least one measurement resource, where the third measurement resource belongs to a second resource type, and the third measurement resource is associated with the second CSI reporting.

Correspondingly, after sending the at least one measurement resource, the method further includes the following steps.

The network device receives the CSI report.

Optionally, the plurality of resource types include SBFD and non-SBFD.

Optionally, the first resource type includes SBFD, and the second resource type includes non-SBFD.

### IV. Example explanation of functional units of yet another communication apparatus

### [Description]

The above mainly introduces the solutions of the embodiments of the present disclosure from the perspective of method sides. It can be understood that, in order to implement the above functions, a network device contains corresponding hardware structures and/or software modules for performing various functions. Those skilled in the art should easily realize that, in conjunction with the exemplary units and algorithm steps described in the embodiments disclosed herein, the present disclosure can be implemented in the form of hardware or a combination of hardware and computer software. Whether a certain function is performed by hardware or by computer software driving hardware, depends on a specific application and a design constraint condition of the technical solution. Those skilled in the art may use different methods to implement the described functions, for each specific application, but such an implementation should not be considered beyond the scope of the present disclosure.

In the embodiments of the present disclosure, division of functional units of the network device may be performed according to the above method examples. For example, various functional units may be divided corresponding to various functions, or two or more functions may also be integrated into a processing module. The above integrated unit may be implemented in the form of hardware or may be implemented in the form of a software program module. It should be noted that, the division of units in the embodiments of the present disclosure is schematic, which is only a logical functional division, and there may be other divisions in actual implementations.

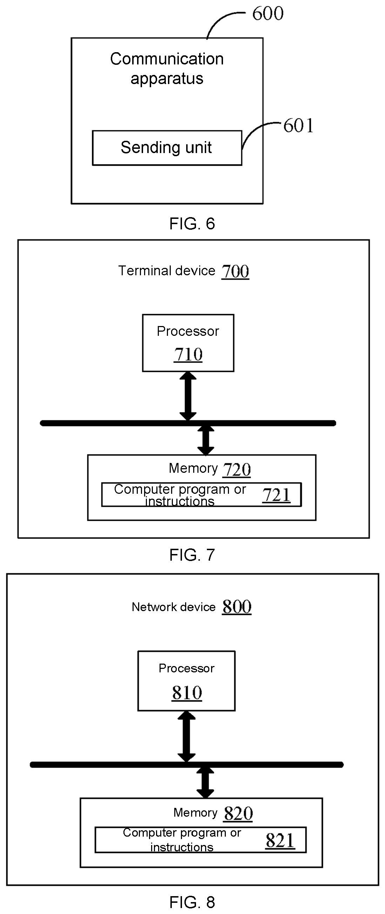

In a case where an integrated unit is adopted, FIG. 6 is a block diagram of components of functional units of a communication apparatus of the embodiments of the present disclosure. Herein, a communication apparatus 600 includes a sending unit 601.

Optionally, the sending unit 601 may be a module unit configured to send and process signals, information, etc., which is not specifically limited thereto.

Optionally, the communication apparatus 600 may further include a receiving unit. Herein, the receiving unit may be a module unit configured to receive and process signals, information, etc., which is not specifically limited thereto.

Optionally, the communication apparatus 600 may further include a storage unit, configured to store computer program code or instructions executable by the communication apparatus 600. Herein, the storage unit may be a memory.

Optionally, the communication apparatus 600 may be a chip or a chip module.

Optionally, the sending unit 601 may be integrated in a communication unit. Herein, the communication unit may be a communication interface, a transceiver, a transceiver circuit, etc.

Optionally, the sending unit 601 may be integrated in a processing unit.

It should be noted that, the processing unit may be a processor or a controller, for example, may be a baseband processor, a baseband chip, a central processing unit (CPU), a general-purpose processor, a digital signal processor (DSP), an application-specific integrated circuit (ASIC), a field programmable gate array (FPGA) or other programmable logic devices, transistor logic devices, hardware components, or any combination thereof. It may implement or execute various illustrative logical blocks, modules and circuits described in conjunction with the disclosed contents of the present disclosure. The processing unit may also be a combination that implements computing functions, for example, containing a combination of one or more microprocessors, a combination of a digital signal processor (DSP) and a microprocessor, or the like.

Optionally, the communication apparatus 600 is configured to perform any one of the steps performed by a chip/chip module/network device, etc., in the above method embodiments, etc.

In actual implementation, the sending unit 601 is configured to perform any one of the steps in the above method embodiments, and upon executing actions such as sending, etc., other units may be selectively invoked to complete corresponding operations. A detailed explanation is given below.

The sending unit 601 is configured to send first information, where the first information is used for indicating a resource type of a measurement resource.

It can be seen that, in the present embodiment, the resource type of the measurement resource associated with the CSI reporting being indicated by the first information, is implemented. Since the channel measurement result or the interference measurement result of the CSI reporting is obtained by performing channel measurement or interference measurement according to the measurement resource associated with the CSI reporting, therefore, when the measurement resource associated with the CSI reporting belongs to one resource type, the channel measurement result or the interference measurement result of the CSI reporting may separately reflect one resource type. Thus, after the network device acquires the channel measurement result or the interference measurement result, the network device may perform accurate channel estimation or interference estimation for one resource type separately, so as to adapt to a scenario where the network expects to only perform channel estimation or interference estimation for one resource type.

It should be noted that, for the specific implementations of various operations in the embodiments described in FIG. 6, reference may be made to the descriptions of the method embodiments shown above in detail, which will not be specifically repeated herein.

### [Some possible implementations]

Optionally, the first information being used for indicating the resource type of the measurement resource includes: the first information being used for indicating, from a plurality of resource types, a resource type to which at least one measurement resource for CSI measurement belongs; or the first information being used for indicating, from a plurality of resource types, a resource type to which a measurement resource associated with CSI reporting belongs, where the measurement resource associated with the CSI reporting is among the at least one measurement resource.

Optionally, the resource type to which the channel measurement resource among the at least one measurement resource belongs is the same as the resource type to which an interference measurement resource among the at least one measurement resource belongs; or
the resource type to which the channel measurement resource associated with the CSI reporting belongs is the same as the resource type to which the interference measurement resource associated with the CSI reporting belongs.

Optionally, the resource type to which the measurement resource associated with the CSI reporting belongs is the same as the resource type to which the first measurement resource belongs, where the first measurement resource is one channel measurement resource among at least one measurement resource;
the first measurement resource belongs to the first resource type or the second resource type.

Optionally, the first measurement resource is a channel measurement resource within a first measurement resource set with a time-domain position that is latest to the CSI reference resource corresponding to the CSI reporting; or
the first measurement resource is a channel measurement resource with a minimum index among the at least one measurement resource; or
the first measurement resource is a channel measurement resource with a minimum index in the first measurement resource set;
the first measurement resource set consists of measurement resources among at least one measurement resource, that are located before the time-domain position of the CSI reference resource corresponding to the CSI reporting.

Optionally, if the measurement resource associated with the CSI reporting belongs to the first resource type, a CSI reference resource corresponding to the CSI reporting is located at a first valid downlink slot;
the first valid downlink slot includes at least one first downlink symbol or at least one first flexible symbol, and/or the first valid downlink slot is not within a measurement gap;
the first downlink symbol refers to a downlink symbol belonging to the first resource type;
the first flexible symbol refers to a flexible symbol belonging to a first resource type.

Optionally, if the measurement resource associated with the CSI reporting belongs to the second resource type, the CSI reference resource corresponding to the CSI reporting is located at the second valid downlink slot;
the second valid downlink slot includes at least one second downlink symbol or at least one second flexible symbol, and/or the second valid downlink slot is not within the measurement gap;
the second downlink symbol refers to a downlink symbol belonging to the second resource type;
the second flexible symbol refers to a flexible symbol belonging to the second resource type.

Optionally, if CSI reporting is periodic or semi-persistent, and the measurement resources associated with the CSI reporting includes a channel measurement resource, a first parameter is a minimum value among values greater than or equal to 4 · 2^{µ_{DL}} such that the CSI reference resource corresponding to the CSI reporting is located at the first valid downlink slot or the second valid downlink slot; or
if the CSI reporting is periodic or semi-persistent and the measurement resources associated with the CSI reporting include a plurality of channel measurement resources, the first parameter is a minimum value among values greater than or equal to 5 · 2^{µ_{DL}} such that the CSI reference resource corresponding to the CSI reporting is located at the first valid downlink slot or the second valid downlink slot;
the first parameter represents a slot offset between a downlink slot corresponding to an uplink slot where the CSI reporting is located and the first valid downlink slot or the second valid downlink slot;
µ_{DL} represents the downlink subcarrier spacing.

Optionally, if the CSI reporting is aperiodic, and downlink control information (DCI) used for triggering the CSI reporting and the CSI reporting are in a same slot, the first valid downlink slot or the second valid downlink slot is the slot where the DCI is located; or
if the CSI reporting is aperiodic, and the DCI used for triggering the CSI reporting and the CSI reporting are not in a same slot, the first parameter is a minimum value among values greater than or equal to $\left⌊Z′/{N}_{symb}^{slot}\right⌋$ such that the CSI reference resource corresponding to the CSI reporting is located at the first valid downlink slot or the second valid downlink slot;
the first parameter represents an offset between a downlink slot corresponding to an uplink slot where the CSI reporting is located and the first valid downlink slot or the second valid downlink slot;
${N}_{symb}^{slot}$ represents a number of symbols contained in a slot, and *Z'* represents a processing time for CSI calculation.

Optionally, the communication apparatus 600 further includes a receiving unit; and the receiving unit is configured to:
receive a CSI report, where the CSI report includes a first measurement result and/or a second measurement result; the first measurement result is obtained by measuring a second measurement resource among the at least one measurement resource, where the second measurement resource belongs to the first resource type, and the second measurement resource is associated with the first CSI reporting; the second measurement result is obtained by measuring a third measurement resource among the at least one measurement resource, where the third measurement resource belongs to a second resource type, and the third measurement resource is associated with the second CSI reporting.

Correspondingly, after sending the at least one measurement resource, the method further includes the following step.

The network device receives the CSI report.

Optionally, the plurality of resource types include SBFD and non-SBFD.

Optionally, the first resource type includes SBFD, and the second resource type includes non-SBFD.

### V. Example explanation of a terminal device

Please refer to FIG. 7, FIG. 7 is a structural schematic diagram of a terminal device of the embodiments of the present disclosure. Herein, a terminal device 700 may include a processor 710, a memory 720, and a communication bus configured to connect the processor 710 and the memory 720.

Optionally, the memory 720 includes, but is not limited to, a random access memory (RAM), a read-only memory (ROM), an erasable programmable read-only memory (EPROM), or a compact disc read-only memory (CD-ROM), and the memory 720 is configured to store program codes executable by the terminal device 700 and data transmitted by the terminal device 700.

Optionally, the terminal device 700 further includes a communication interface for receiving and transmitting data.

Optionally, the terminal device 700 may be the above first terminal device.

Optionally, the processor 710 may be one or more CPUs; in a case where the processor 710 is one CPU, the CPU may be a single-core CPU or a multi-core CPU.

Optionally, the processor 710 may be a baseband chip, a chip, a CPU, a general-purpose processor, a DSP, an ASIC, an FPGA or other programmable logic devices, transistor logic devices, hardware components, or any combination thereof.

In actual implementation, the processor 710 in the terminal device 700 is configured to execute a computer program or computer instructions 721 stored in the memory 720, and perform operations of:
receiving first information, where the first information is used for indicating a resource type of a measurement resource;
performing measurement and reporting CSI according to the first information.

It can be seen that, in the present embodiment, the resource type of the measurement resource associated with the CSI reporting being indicated by the first information, is implemented. Since the channel measurement result or the interference measurement result of the CSI reporting is obtained by performing channel measurement or interference measurement according to the measurement resource associated with the CSI reporting, therefore, when the measurement resource associated with the CSI reporting belongs to one resource type, the channel measurement result or the interference measurement result of the CSI reporting may separately reflect one resource type. Thus, after the network device acquires the channel measurement result or the interference measurement result, the network device may perform accurate channel estimation or interference estimation for one resource type separately, so as to adapt to a scenario where the network expects to only perform channel estimation or interference estimation for one resource type.

It should be noted that, for specific implementations of various operations, references may be made to the corresponding descriptions of the method embodiments above, and the terminal device 700 may be configured to perform the above method embodiments of the present disclosure, which will not be repeated herein.

### VI. Example explanation of a network device

Please refer to FIG. 8, FIG. 8 is a structural schematic diagram of a network device of the embodiments of the present disclosure. Herein, a network device 800 includes a processor 810, a memory 820, and a communication bus configured to connect the processor 810 and the memory 820.

Optionally, the memory 820 includes, but is not limited to, an RAM, an ROM, an EPROM, or a CD-ROM, and the memory 820 is configured to store related instructions and data.

Optionally, the network device 800 further includes a communication interface for receiving and sending data.

Optionally, the processor 810 may be one or more CPUs; in a case where the processor 810 is one CPU, the CPU may be a single-core CPU or a multi-core CPU.

Optionally, the processor 810 may be a baseband chip, a chip, a CPU, a general-purpose processor, a DSP, an ASIC, an FPGA or other programmable logic devices, transistor logic devices, hardware components, or any combination thereof.

Optionally, the processor 810 in the network device 800 is configured to execute a computer program or computer instructions 821 stored in the memory 820, and perform operation of:
sending first information, where the first information is used for indicating a resource type of a measurement resource.

It can be seen that, in the present embodiment, the resource type of the measurement resource associated with the CSI reporting being indicated by the first information, is implemented. Since the channel measurement result or the interference measurement result of the CSI reporting is obtained by performing channel measurement or interference measurement according to the measurement resource associated with the CSI reporting, therefore, when the measurement resource associated with the CSI reporting belongs to one resource type, the channel measurement result or the interference measurement result of the CSI reporting may separately reflect one resource type. Thus, after the network device acquires the channel measurement result or the interference measurement result, the network device may perform accurate channel estimation or interference estimation for one resource type separately, so as to adapt to a scenario where the network expects to only perform channel estimation or interference estimation for one resource type.

It should be noted that, for specific implementations of various operations, references may be made to the corresponding descriptions of the method embodiments above, and the network device 800 may be configured to perform the above method embodiments of the present disclosure, which will not be repeated herein.

### VII. Other related example explanations

Optionally, the above method embodiments may be applied to the terminal device or within the terminal device. That is, the execution entity of the above method embodiments may be a terminal device, or may be a chip, a chip module, or a module, etc., which is not specifically limited thereto.

Optionally, the above method embodiments may be applied to the network device or within the network device. That is, the execution entity of the above method embodiments may be a network device, or may be a chip, a chip module, or a module, etc., which is not specifically limited thereto.

The embodiments of the present disclosure further provide a chip, including a processor, a memory, and a computer program or computer instructions stored in the memory, where the processor executes the computer program or the computer instruction, to implement the steps described in the above method embodiments.

The embodiments of the present disclosure further provide a chip module, including a transceiver component and a chip, the chip includes a processor, a memory, and a computer program or computer instructions stored in the memory, where the processor executes the computer program or the computer instructions, to implement the steps described in the above method embodiments.

The embodiments of the present disclosure further provide a computer readable storage medium, and the computer readable storage medium has stored a computer program or computer instructions thereon, and the computer program or the computer instructions, upon being executed, implement the steps described in the above method embodiments.

The embodiments of the present disclosure further provide a computer program product, including a computer program or computer instructions, and the computer program or the computer instructions, upon being executed, implement the steps described in the above method embodiments.

The embodiments of the present disclosure further provide a communication system, including the above terminal device and the above network device.

It should be noted that, for simplicity of description, the above various embodiments are described as a series of action combinations. Those skilled in the art should be aware that the present disclosure is not limited by the described order of actions, as certain steps in the embodiments of the present disclosure may be performed in other orders or simultaneously. In addition, those skilled in the art should also be aware that the embodiments described in the specification are all preferred embodiments, and the actions, steps, modules or units involved are not necessarily required by the embodiments of the present disclosure.

In the above embodiments, the descriptions of various embodiments of the present disclosure have their own emphases, and for parts not detailed in a certain embodiment, reference may be made to related descriptions in other embodiments.

The steps of the methods or algorithms described in the embodiments of the present disclosure may be implemented by means of hardware, or may be implemented by means of software instructions executed by a processor. The software instructions may consist of corresponding software modules, and the software modules may be stored in an RAM, a flash memory, an ROM, an EPROM, an electrically EEPROM, a register, a hard disk, a mobile hard disk, a compact disc read-only memory (CD-ROM), or any other form of storage medium known in the art. An exemplary storage medium is coupled to the processor, such that the processor may read information from the storage medium and write information to the storage medium. Of course, the storage medium may also be a random-access part of the processor. The processor and the storage medium may be located in an ASIC. In addition, the ASIC may be located in a terminal device or a management device. Of course, the processor and the storage medium may also be located in the terminal device or the management device as discrete components.

Those skilled in the art should appreciate that, in one or more of the above examples, all or a part of functions described in embodiments of the present disclosure may be implemented through software, hardware, firmware, or any other combination thereof. When implemented by software, all or a part of the functions may be implemented in the form of a computer program product. The computer program product includes one or more computer instructions. When the computer program instructions are loaded and executed on a computer, all or a part of the processes or functions may be generated according to the embodiments of the present disclosure. The computer may be a general-purpose computer, a special-purpose computer, a computer network, or other programmable apparatuses. The computer instructions may be stored in a computer readable storage medium, or transmitted from a computer readable storage medium to another computer readable storage medium. For example, the computer instructions may be transmitted from a website site, a computer, a server, or a data center to another website site, another computer, another server, or another data center via a wired (e.g., coaxial cable, optical fiber, digital subscriber line (DSL)) or wireless (e.g., infrared, wireless, microwave, etc.) manner. The computer readable storage medium may be any available medium that may be accessed by a computer, or a data storage device such as a server or a data center, etc., integrated with one or more available media. The available medium may be a magnetic medium (e.g., a floppy disk, a hard disk, a magnetic tape), an optical medium (e.g., a digital video disc (DVD)), or a semiconductor medium (e.g., a solid state disk (SSD)), etc.

Various modules/units contained in various apparatuses and products described in the above embodiments may be software modules/units, or may also be hardware modules/units, or a part modules/units are software modules/units and a part of modules/units are hardware modules/units. For example, with regard to various apparatuses or products applied to or integrated into a chip, various modules/units contained therein may all be implemented by means of hardware such as a circuit, etc.; or at least part of the modules/units may be implemented by means of a software program, and software program is executed on a processor integrated in the chip, and the remaining (if any) modules/units may be implemented by means of hardware such as a circuit, etc. For various apparatuses and products applied to or integrated into a chip module, various modules/units contained therein may all be implemented by means of hardware such as circuit, etc., and different modules/units may be located in a same component (e.g., chip, circuit module, etc.) or different components of the chip module. Alternatively, at least part of the modules/units may be implemented by means of a software program, and the software program is executed on a processor integrated into the chip module, and the remaining (if any) of the modules/units may be implemented by means of hardware such as circuit, etc. For various apparatuses and products applied to or integrated into a terminal device, various modules/units contained therein may all be implemented by means of hardware such as circuit, etc., and different modules/units may be located in a same component (e.g., chip, circuit module, etc.) or different components of the terminal device. Alternatively, at least part of the modules/units may be implemented by means of a software program, and the software program is executed on a processor integrated into the terminal device, and the remaining (if any) of the modules/units may be implemented by means of hardware such as circuit, etc.

The above specific implementations further explain the objectives, technical solutions, and beneficial effects of the embodiments of the present disclosure in detail. It should be understood that, the above are merely specific implementations of the embodiments of the present disclosure and are not used to limit the protection scope of the embodiments of the present disclosure. Any modifications, equivalent replacements, improvements, etc. made based on the technical solutions of the embodiments of the present disclosure shall be included in the protection scope of the embodiments of the present disclosure.

## Claims

1. A communication method, **characterized by** comprising:
receiving first information, wherein the first information is used for indicating a resource type of a measurement resource; and
performing measurement according to the first information and reporting channel state information (CSI).

2. The method according to claim 1, wherein the first information being used for indicating the resource type of the measurement resource comprises:
the first information being used for indicating, from a plurality of resource types, a resource type to which at least one measurement resource for CSI measurement belongs; or
the first information being used for indicating, from a plurality of resource types, a resource type to which a measurement resource associated with CSI reporting belongs, wherein the measurement resource associated with the CSI reporting is among the at least one measurement resource.

3. The method according to claim 2, wherein
a resource type to which a channel measurement resource among the at least one measurement resource belongs is the same as a resource type to which an interference measurement resource among the at least one measurement resource belongs; or
a resource type to which a channel measurement resource associated with the CSI reporting belongs is the same as a resource type to which an interference measurement resource associated with the CSI reporting belongs.

4. The method according to claim 2, wherein the resource type to which the measurement resource associated with the CSI reporting belongs is the same as a resource type to which a first measurement resource belongs, and the first measurement resource is a channel measurement resource among the at least one measurement resource.

5. The method according to claim 4, wherein
the first measurement resource is a channel measurement resource with a time-domain position latest to a CSI reference resource corresponding to the CSI reporting within a first measurement resource set; or
the first measurement resource is a channel measurement resource with a minimum index among the at least one measurement resource; or
the first measurement resource is a channel measurement resource with a minimum index in the first measurement resource set;
the first measurement resource set consists of measurement resources located before a time-domain position of the CSI reference resource corresponding to the CSI reporting among the at least one measurement resource.

6. The method according to claim 2, wherein
in a case where the measurement resource associated with the CSI reporting belongs to a first resource type, the CSI reference resource corresponding to the CSI reporting is located at a first valid downlink slot;
the first valid downlink slot comprises at least one first downlink symbol or at least one first flexible symbol, and/or the first valid downlink slot is not within a measurement gap;
the first downlink symbol refers to a downlink symbol belonging to the first resource type;
the first flexible symbol refers to a flexible symbol belonging to the first resource type.

7. The method according to claim 2, wherein
in a case where the measurement resource associated with the CSI reporting belongs to a second resource type, the CSI reference resource corresponding to the CSI reporting is located at a second valid downlink slot;
the second valid downlink slot comprises at least one second downlink symbol or at least one second flexible symbol, and/or the second valid downlink slot is not within a measurement gap;
the second downlink symbol refers to a downlink symbol belonging to the second resource type;
the second flexible symbol refers to a flexible symbol belonging to the second resource type.

8. The method according to claim 6 or 7, wherein
in a case where the CSI reporting is periodic or semi-persistent and the measurement resource associated with the CSI reporting comprises a channel measurement resource, a first parameter is a minimum value among values greater than or equal to 4 · 2^{µ_{DL}} such that the CSI reference resource corresponding to the CSI reporting is located at the first valid downlink slot or the second valid downlink slot; or
in a case where the CSI reporting is periodic or semi-persistent and the measurement resource associated with the CSI reporting comprises a plurality of channel measurement resources, a first parameter is a minimum value among values greater than or equal to 5 · 2^{µ_{DL}} such that the CSI reference resource corresponding to the CSI reporting is located at the first valid downlink slot or the second valid downlink slot;
the first parameter represents a slot offset between a downlink slot corresponding to an uplink slot where the CSI reporting is located and the first valid downlink slot or the second valid downlink slot;
µ_{DL} represents a downlink subcarrier spacing.

9. The method according to claim 6 or 7, wherein
in a case where the CSI reporting is aperiodic and downlink control information (DCI) used for triggering the CSI reporting and the CSI reporting are in a same slot, the first valid downlink slot or the second valid downlink slot is a slot in which the DCI is located; or
in a case where the CSI reporting is aperiodic and DCI used for triggering the CSI reporting and the CSI reporting are not in a same slot, a first parameter is a minimum value among values greater than or equal to $\left⌊Z′/{N}_{symb}^{slot}\right⌋$ such that the CSI reference resource corresponding to the CSI reporting is located at the first valid downlink slot or the second valid downlink slot;
the first parameter represents an offset between a downlink slot corresponding to an uplink slot where the CSI reporting is located and the first valid downlink slot or the second valid downlink slot;
${N}_{symb}^{slot}$ represents a number of symbols contained within a slot, and *Z'* represents a processing time for CSI calculation.

10. The method according to any one of claims 2 to 9, wherein reporting the CSI comprises:
sending a CSI report, wherein the CSI report comprises a first measurement result and/or a second measurement result;
the first measurement result is obtained by measuring a second measurement resource among the at least one measurement resource, the second measurement resource belongs to a first resource type, and the second measurement resource is associated with a first CSI reporting;
the second measurement result is obtained by measuring a third measurement resource among the at least one measurement resource, the third measurement resource belongs to a second resource type, and the third measurement resource is associated with a second CSI reporting.

11. The method according to any one of claims 2 to 10, wherein the plurality of resource types comprise subband full duplex (SBFD) and non-SBFD.

12. A communication method, **characterized by** comprising:
sending first information, wherein the first information is used for indicating a resource type of a measurement resource.

13. The method according to claim 12, wherein the first information being used for indicating the resource type of the measurement resource comprises:
the first information being used for indicating, from a plurality of resource types, a resource type to which at least one measurement resource for CSI measurement belongs; or
the first information being used for indicating, from a plurality of resource types, a resource type to which a measurement resource associated with CSI reporting belongs, wherein the measurement resource associated with the CSI reporting is among the at least one measurement resource.

14. The method according to claim 13, wherein
a resource type to which a channel measurement resource among the at least one measurement resource belongs is the same as a resource type to which an interference measurement resource among the at least one measurement resource belongs; or
a resource type to which a channel measurement resource associated with the CSI reporting belongs is the same as a resource type to which an interference measurement resource associated with the CSI reporting belongs.

15. The method according to claim 13, wherein the resource type to which the measurement resource associated with the CSI reporting belongs is the same as a resource type to which a first measurement resource belongs, and the first measurement resource is a channel measurement resource among the at least one measurement resource.

16. The method according to claim 15, wherein
the first measurement resource is a channel measurement resource with a time-domain position latest to a CSI reference resource corresponding to the CSI reporting within a first measurement resource set; or
the first measurement resource is a channel measurement resource with a minimum index among the at least one measurement resource; or
the first measurement resource is a channel measurement resource with a minimum index in the first measurement resource set;
the first measurement resource set consists of measurement resources located before a time-domain position of the CSI reference resource corresponding to the CSI reporting among the at least one measurement resource.

17. The method according to claim 13, wherein
in a case where the measurement resource associated with the CSI reporting belongs to a first resource type, the CSI reference resource corresponding to the CSI reporting is located at a first valid downlink slot;
the first valid downlink slot comprises at least one first downlink symbol or at least one first flexible symbol, and/or the first valid downlink slot is not within a measurement gap;
the first downlink symbol refers to a downlink symbol belonging to the first resource type;
the first flexible symbol refers to a flexible symbol belonging to the first resource type.

18. The method according to claim 13, wherein
in a case where the measurement resource associated with the CSI reporting belongs to a second resource type, the CSI reference resource corresponding to the CSI reporting is located at a second valid downlink slot;
the second valid downlink slot comprises at least one second downlink symbol or at least one second flexible symbol, and/or the second valid downlink slot is not within a measurement gap;
the second downlink symbol refers to a downlink symbol belonging to the second resource type;
the second flexible symbol refers to a flexible symbol belonging to the second resource type.

19. The method according to claim 17 or 18, wherein
in a case where the CSI reporting is periodic or semi-persistent and the measurement resource associated with the CSI reporting comprises a channel measurement resource, a first parameter is a minimum value among values greater than or equal to 4 · 2^{µ_{DL}} such that the CSI reference resource corresponding to the CSI reporting is located at the first valid downlink slot or the second valid downlink slot; or
in a case where the CSI reporting is periodic or semi-persistent and the measurement resource associated with the CSI reporting comprises a plurality of channel measurement resources, a first parameter is a minimum value among values greater than or equal to 5 · 2^{µ_{DL}} such that the CSI reference resource corresponding to the CSI reporting is located at the first valid downlink slot or the second valid downlink slot;
the first parameter represents a slot offset between a downlink slot corresponding to an uplink slot where the CSI reporting is located and the first valid downlink slot or the second valid downlink slot;
µ_{DL} represents a downlink subcarrier spacing.

20. The method according to claim 17 or 18, wherein
in a case where the CSI reporting is aperiodic and downlink control information (DCI) used for triggering the CSI reporting and the CSI reporting are in a same slot, the first valid downlink slot or the second valid downlink slot is a slot in which the DCI is located; or
in a case where the CSI reporting is aperiodic and DCI used for triggering the CSI reporting and the CSI reporting are not in a same slot, a first parameter is a minimum value among values greater than or equal to $\left⌊Z′/{N}_{symb}^{slot}\right⌋$ such that the CSI reference resource corresponding to the CSI reporting is located at the first valid downlink slot or the second valid downlink slot;
the first parameter represents an offset between a downlink slot corresponding to an uplink slot where the CSI reporting is located and the first valid downlink slot or the second valid downlink slot;
${N}_{symb}^{slot}$ represents a number of symbols contained within a slot, and *Z'* represents a processing time for CSI calculation.

21. The method according to any one of claims 13 to 20, wherein after sending the first information, the method further comprises:
receiving a CSI report, wherein the CSI report comprises a first measurement result and/or a second measurement result;
the first measurement result is obtained by measuring a second measurement resource among the at least one measurement resource, the second measurement resource belongs to a first resource type, and the second measurement resource is associated with a first CSI reporting;
the second measurement result is obtained by measuring a third measurement resource among the at least one measurement resource, the third measurement resource belongs to a second resource type, and the third measurement resource is associated with a second CSI reporting.

22. The method according to any one of claims 13 to 21, wherein the plurality of resource types comprise subband full duplex (SBFD) and non-SBFD.

23. A communication apparatus, **characterized by** comprising:
a receiving unit, configured to receive first information, wherein the first information is used for indicating a resource type of a measurement resource;
a sending unit, configured to perform measurement and report channel state information (CSI) according to the first information.

24. The apparatus according to claim 23, wherein the first information being used for indicating the resource type of the measurement resource comprises:
the first information being used for indicating, from a plurality of resource types, a resource type to which at least one measurement resource for CSI measurement belongs; or
the first information being used for indicating, from a plurality of resource types, a resource type to which a measurement resource associated with CSI reporting belongs, wherein the measurement resource associated with the CSI reporting is among the at least one measurement resource.

25. The apparatus according to claim 24, wherein
a resource type to which a channel measurement resource among the at least one measurement resource belongs is the same as a resource type to which an interference measurement resource among the at least one measurement resource belongs; or
a resource type to which a channel measurement resource associated with the CSI reporting belongs is the same as a resource type to which an interference measurement resource associated with the CSI reporting belongs.

26. The apparatus according to claim 24, wherein the resource type to which the measurement resource associated with the CSI reporting belongs is the same as a resource type to which a first measurement resource belongs, and the first measurement resource is a channel measurement resource among the at least one measurement resource.

27. The apparatus according to claim 26, wherein
the first measurement resource is a channel measurement resource with a time-domain position latest to a CSI reference resource corresponding to the CSI reporting within a first measurement resource set; or
the first measurement resource is a channel measurement resource with a minimum index among the at least one measurement resource; or
the first measurement resource is a channel measurement resource with a minimum index in the first measurement resource set;
the first measurement resource set consists of measurement resources located before a time-domain position of the CSI reference resource corresponding to the CSI reporting among the at least one measurement resource.

28. The apparatus according to claim 24, wherein
in a case where the measurement resource associated with the CSI reporting belongs to a first resource type, the CSI reference resource corresponding to the CSI reporting is located at a first valid downlink slot;
the first valid downlink slot comprises at least one first downlink symbol or at least one first flexible symbol, and/or the first valid downlink slot is not within a measurement gap;
the first downlink symbol refers to a downlink symbol belonging to the first resource type;
the first flexible symbol refers to a flexible symbol belonging to the first resource type.

29. The apparatus according to claim 24, wherein
in a case where the measurement resource associated with the CSI reporting belongs to a second resource type, the CSI reference resource corresponding to the CSI reporting is located at a second valid downlink slot;
the second valid downlink slot comprises at least one second downlink symbol or at least one second flexible symbol, and/or the second valid downlink slot is not within a measurement gap;
the second downlink symbol refers to a downlink symbol belonging to the second resource type;
the second flexible symbol refers to a flexible symbol belonging to the second resource type.

30. The apparatus according to claim 28 or 29, wherein
in a case where the CSI reporting is periodic or semi-persistent and the measurement resource associated with the CSI reporting comprises a channel measurement resource, a first parameter is a minimum value among values greater than or equal to 4 · 2^{µ_{DL}} such that the CSI reference resource corresponding to the CSI reporting is located at the first valid downlink slot or the second valid downlink slot; or
in a case where the CSI reporting is periodic or semi-persistent and the measurement resource associated with the CSI reporting comprises a plurality of channel measurement resources, a first parameter is a minimum value among values greater than or equal to 5 · 2^{µ_{DL}} such that the CSI reference resource corresponding to the CSI reporting is located at the first valid downlink slot or the second valid downlink slot;
the first parameter represents a slot offset between a downlink slot corresponding to an uplink slot where the CSI reporting is located and the first valid downlink slot or the second valid downlink slot;
µ_{DL} represents a downlink subcarrier spacing.

31. The apparatus according to claim 28 or 29, wherein
in a case where the CSI reporting is aperiodic and downlink control information (DCI) used for triggering the CSI reporting and the CSI reporting are in a same slot, the first valid downlink slot or the second valid downlink slot is a slot in which the DCI is located; or
in a case where the CSI reporting is aperiodic and DCI used for triggering the CSI reporting and the CSI reporting are not in a same slot, a first parameter is a minimum value among values greater than or equal to $\left⌊Z′/{N}_{symb}^{slot}\right⌋$ such that the CSI reference resource corresponding to the CSI reporting is located at the first valid downlink slot or the second valid downlink slot;
the first parameter represents an offset between a downlink slot corresponding to an uplink slot where the CSI reporting is located and the first valid downlink slot or the second valid downlink slot;
${N}_{symb}^{slot}$ represents a number of symbols contained within a slot, and *Z'* represents a processing time for CSI calculation.

32. The apparatus according to any one of claims 24 to 31, wherein, in terms of reporting the CSI, the sending unit is configured to:
send a CSI report, wherein the CSI report comprises a first measurement result and/or a second measurement result;
the first measurement result is obtained by measuring a second measurement resource among the at least one measurement resource, the second measurement resource belongs to a first resource type, and the second measurement resource is associated with a first CSI reporting;
the second measurement result is obtained by measuring a third measurement resource among the at least one measurement resource, the third measurement resource belongs to a second resource type, and the third measurement resource is associated with a second CSI reporting.

33. The apparatus according to any one of claims 24 to 32, wherein the plurality of resource types comprise subband full duplex (SBFD) and non-SBFD.

34. A communication apparatus, **characterized by** comprising:
a sending unit, configured to send first information, wherein the first information is used for indicating a resource type of a measurement resource.

35. The apparatus according to claim 34, wherein the first information being used for indicating the resource type of the measurement resource comprises:
the first information being used for indicating, from a plurality of resource types, a resource type to which at least one measurement resource for CSI measurement belongs; or
the first information being used for indicating, from a plurality of resource types, a resource type to which a measurement resource associated with CSI reporting belongs, wherein the measurement resource associated with the CSI reporting is among the at least one measurement resource.

36. The apparatus according to claim 35, wherein a resource type to which a channel measurement resource among the at least one measurement resource belongs is the same as a resource type to which an interference measurement resource among the at least one measurement resource belongs; or
a resource type to which a channel measurement resource associated with the CSI reporting belongs is the same as a resource type to which an interference measurement resource associated with the CSI reporting belongs.

37. The apparatus according to claim 35, wherein the resource type to which the measurement resource associated with the CSI reporting belongs is the same as a resource type to which a first measurement resource belongs, and the first measurement resource is a channel measurement resource among the at least one measurement resource.

38. The apparatus according to claim 37, wherein
the first measurement resource is a channel measurement resource with a time-domain position latest to a CSI reference resource corresponding to the CSI reporting within a first measurement resource set; or
the first measurement resource is a channel measurement resource with a minimum index among the at least one measurement resource; or
the first measurement resource is a channel measurement resource with a minimum index in the first measurement resource set;
the first measurement resource set consists of measurement resources located before a time-domain position of the CSI reference resource corresponding to the CSI reporting among the at least one measurement resource.

39. The apparatus according to claim 35, wherein
in a case where the measurement resource associated with the CSI reporting belongs to a first resource type, the CSI reference resource corresponding to the CSI reporting is located at a first valid downlink slot;
the first valid downlink slot comprises at least one first downlink symbol or at least one first flexible symbol, and/or the first valid downlink slot is not within a measurement gap;
the first downlink symbol refers to a downlink symbol belonging to the first resource type;
the first flexible symbol refers to a flexible symbol belonging to the first resource type.

40. The apparatus according to claim 35, wherein
in a case where the measurement resource associated with the CSI reporting belongs to a second resource type, the CSI reference resource corresponding to the CSI reporting is located at a second valid downlink slot;
the second valid downlink slot comprises at least one second downlink symbol or at least one second flexible symbol, and/or the second valid downlink slot is not within a measurement gap;
the second downlink symbol refers to a downlink symbol belonging to the second resource type;
the second flexible symbol refers to a flexible symbol belonging to the second resource type.

41. The apparatus according to claim 39 or 40, wherein
in a case where the CSI reporting is periodic or semi-persistent and the measurement resource associated with the CSI reporting comprises a channel measurement resource, a first parameter is a minimum value among values greater than or equal to 4 · 2^{µ_{DL}} such that the CSI reference resource corresponding to the CSI reporting is located at the first valid downlink slot or the second valid downlink slot; or
in a case where the CSI reporting is periodic or semi-persistent and the measurement resource associated with the CSI reporting comprises a plurality of channel measurement resources, a first parameter is a minimum value among values greater than or equal to 5 · 2^{µ_{DL}} such that the CSI reference resource corresponding to the CSI reporting is located at the first valid downlink slot or the second valid downlink slot;
the first parameter represents a slot offset between a downlink slot corresponding to an uplink slot where the CSI reporting is located and the first valid downlink slot or the second valid downlink slot;
µ_{DL} represents a downlink subcarrier spacing.

42. The apparatus according to claim 39 or 40, wherein
in a case where the CSI reporting is aperiodic and downlink control information (DCI) used for triggering the CSI reporting and the CSI reporting are in a same slot, the first valid downlink slot or the second valid downlink slot is a slot in which the DCI is located; or
in a case where the CSI reporting is aperiodic and DCI used for triggering the CSI reporting and the CSI reporting are not in a same slot, a first parameter is a minimum value among values greater than or equal to $\left⌊Z′/{N}_{symb}^{slot}\right⌋$ such that the CSI reference resource corresponding to the CSI reporting is located at the first valid downlink slot or the second valid downlink slot;
the first parameter represents an offset between a downlink slot corresponding to an uplink slot where the CSI reporting is located and the first valid downlink slot or the second valid downlink slot;
${N}_{symb}^{slot}$ represents a number of symbols contained within a slot, and Z' represents a processing time for CSI calculation.

43. The apparatus according to any one of claims 35 to 42, wherein the communication apparatus further comprises a receiving unit; after sending the first information, the receiving unit is further configured to:
receive a CSI report, wherein the CSI report comprises a first measurement result and/or a second measurement result;
the first measurement result is obtained by measuring a second measurement resource among the at least one measurement resource, the second measurement resource belongs to a first resource type, and the second measurement resource is associated with a first CSI reporting;
the second measurement result is obtained by measuring a third measurement resource among the at least one measurement resource, the third measurement resource belongs to a second resource type, and the third measurement resource is associated with a second CSI reporting.

44. The apparatus according to any one of claims 35 to 43, wherein the plurality of resource types comprise subband full duplex (SBFD) and non-SBFD.

45. A terminal device, **characterized by** comprising a processor, a memory, and a computer program or computer instructions stored on the memory, wherein the processor executes the computer program or the computer instructions, to implement steps of the method according to any one of claims 1 to 11.

46. A network device, **characterized by** comprising a processor, a memory, and a computer program or computer instructions stored on the memory, wherein the processor executes the computer program or the computer instructions, to implement steps of the method according to any one of claims 12 to 22.

47. A chip, comprising a processor, wherein the processor performs steps of the method according to any one of claims 1 to 22.

48. A computer readable storage medium, **characterized in that** the computer readable storage medium has stored a computer program or computer instructions thereon, and the computer program or computer instructions, upon being executed, perform steps of the method according to any one of claims 1 to 22.
